(19) Europäisches Patentamt / European Patent Office / Office européen des brevets

(11) **EP 3 687 098 A1**

(12) **EUROPEAN PATENT APPLICATION**
published in accordance with Art. 153(4) EPC

(43) Date of publication:
**29.07.2020 Bulletin 2020/31**

(51) Int Cl.:
*H04L 5/00* *(2006.01)*          *H04W 24/10* *(2009.01)*

(21) Application number: **19743143.0**

(22) Date of filing: **22.01.2019**

(86) International application number:
**PCT/KR2019/000924**

(87) International publication number:
**WO 2019/147000 (01.08.2019 Gazette 2019/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.01.2018   US 201862622039 P**
**14.02.2018   US 201862630307 P**
**06.04.2018   KR 20180040111**
**10.05.2018   US 201862669980 P**
**21.05.2018   KR 20180057673**

(71) Applicant: **LG Electronics Inc.**
**07336 SEOUL (KR)**

(72) Inventors:
• **KIM, Jaehyung**
  **Seoul 06772 (KR)**
• **YANG, Suckchel**
  **Seoul 06772 (KR)**
• **KIM, Seonwook**
  **Seoul 06772 (KR)**
• **PARK, Haewook**
  **Seoul 06772 (KR)**
• **AHN, Joonkui**
  **Seoul 06772 (KR)**

(74) Representative: **Plasseraud IP**
**66, rue de la Chaussée d'Antin**
**75440 Paris Cedex 09 (FR)**

(54) **METHOD FOR TRANSMITTING PLURALITY OF PIECES OF UPLINK CONTROL INFORMATION THROUGH PHYSICAL UPLINK CONTROL CHANNEL IN WIRELESS COMMUNICATION SYSTEM, AND DEVICE THEREFOR**

(57)    This specification provides a method of transmitting a plurality of uplink control information (UCI) on a physical uplink control channel (PUCCH) in a wireless communication system. More specifically, the method performed by a terminal includes receiving, from a base station, PUCCH resources for a channel state information (CSI) report, multiplexing the plurality of UCI with a specific PUCCH resource of the PUCCH resources, if the PUCCH resources are configured in one slot and the PUCCH resources overlap, and transmitting, to the base station, the plurality of UCI through the specific PUCCH resource.

[Fig. 8]

EP 3 687 098 A1

**Description**

[Technical Field]

The present specification relates to a wireless communication system, and more particularly to a method for transmitting multiple uplink control information on a physical uplink control channel and a device supporting the same.

[Background Art]

A mobile communication system has been developed to provide a voice service while ensuring an activity of a user. However, in the mobile communication system, not only a voice but also a data service is extended. At present, due to an explosive increase in traffic, there is a shortage of resources and users demand a higher speed service, and as a result, a more developed mobile communication system is required.

Requirements of a next-generation mobile communication system should be able to support acceptance of explosive data traffic, a dramatic increase in per-user data rate, acceptance of a significant increase in the number of connected devices, very low end-to-end latency, and high-energy efficiency. To this end, various technologies are researched, which include dual connectivity, massive multiple input multiple output (MIMO), in-band full duplex, non-orthogonal multiple access (NOMA), super wideband support, device networking, and the like.

[Disclosure]

[Technical Problem]

This specification provides a method of determining a PUCCH resource for transmitting a plurality of uplink control information (UCI) on a physical uplink control channel (PUCCH) based on number information of REs related to the PUCCH resource, a maximum code rate, a modulation order, etc.

Furthermore, this specification provides a method of selecting a resource for transmitting UCI in an overlapped PUCCH resource when PUCCH resources overlap.

Technical objects to be achieved in the present invention are not limited to the above-described technical objects, and other technical objects not described above may be evidently understood by a person having ordinary skill in the art to which the present invention pertains from the following description.

[Technical Solution]

This specification provides a method of transmitting a plurality of uplink control information (UCI) on a physical uplink control channel (PUCCH in a system.

Specifically, the method performed by a terminal includes receiving, from a base station, PUCCH resources for a channel state information (CSI) report, multiplexing the plurality of UCI with a specific PUCCH resource of the PUCCH resources, if the PUCCH resources are configured in one slot and the PUCCH resources overlap, and transmitting, to the base station, the plurality of UCI through the specific PUCCH resource.

Furthermore, in this specification, the PUCCH resources for the CSI report are for at least one of a single-CSI report and/or a multi-CSI report.

Furthermore, in this specification, the step of multiplexing the plurality of UCI includes multiplexing the plurality of UCI, configured in the overlapped resource, with a PUCCH resource used for the multi-CSI report, if the PUCCH resources are configured in one slot and some of the PUCCH resources for the single-CSI report overlap.

Furthermore, in this specification, the step of multiplexing the plurality of UCI includes multiplexing the plurality of UCI, configured in all PUCCH resources for the single-CSI report, with a PUCCH resource for the multi-CSI report, if some of the PUCCH resources used for the single-CSI report overlap.

Furthermore, in this specification, the specific PUCCH resource is the remaining PUCCH resource by dropping an overlapped part, if the PUCCH resources are present in one slot and the PUCCH resources overlap.

Furthermore, in this specification, the specific PUCCH resource is a PUCCH resource including a CSI report having high priority based on predetermined priority, if the PUCCH resources are present in one slot and the PUCCH resources overlap.

Furthermore, in this specification, the predetermined priority is determined based on at least one of a CSI report type, CSI report contents, a serving cell index, and/or a report ID.

Furthermore, in this specification, a terminal transmitting a plurality of uplink control information (UCI) on a physical uplink control channel (PUCCH) in a wireless communication system includes a radio frequency (RF) module configured to transmit and receive radio signals and a processor functionally connected to the RF module. The processor is configured to receive, from a base station, PUCCH resources for a channel state information (CSI) report, multiplex the plurality of UCI with a specific PUCCH resource of the PUCCH resources, if the PUCCH resources are configured in one slot and the PUCCH resources overlap, and transmit, to the base station, the plurality of UCI through the specific PUCCH resource.

Furthermore, in this specification, the PUCCH resources for the CSI report are for at least one of a single-CSI report and/or a multi-CSI report.

Furthermore, in this specification, the processor is configured to multiplex the plurality of UCI, configured in the overlapped resource, with a PUCCH resource used for the multi-CSI report, if the PUCCH resources are configured in one slot and some of the PUCCH resources for the single-CSI report overlap.

Furthermore, in this specification, the processor is configured to multiplex the plurality of UCI, configured in all PUCCH resources for the single-CSI report, with a PUCCH resource for the multi-CSI report, if some of the PUCCH resources used for the single-CSI report overlap.

Furthermore, in this specification, the specific PUCCH resource is the remaining PUCCH resource by dropping an overlapped part, if the PUCCH resources are present in one slot and the PUCCH resources overlap.

Furthermore, in this specification, the specific PUCCH resource is a PUCCH resource including a CSI report having high priority based on predetermined priority, if the PUCCH resources are present in one slot and the PUCCH resources overlap.

Furthermore, in this specification, the predetermined priority is determined based on at least one of a CSI report type, CSI report contents, a serving cell index, and/or a report ID.

[Advantageous Effects]

This specification has an effect in that a resource can be efficiently used because a PUCCH resource for transmitting a plurality of uplink control information (UCI) on a physical uplink control channel (PUCCH) is determined based on a maximum code rate, a modulation order, etc.

Furthermore, this specification has an effect in that data can be transmitted and received by incorporating a more accurate channel state because a terminal can make a CSI report by providing a method of transmitting a CSI report in an overlapped PUCCH resource when PUCCH resources for a single-CSI report overlap.

Effects which may be obtained in the present invention are not limited to the above-described effects, and other technical effects not described above may be evidently understood by a person having ordinary skill in the art to which the present invention pertains from the following description.

[Description of Drawings]

The accompanying drawings that are included to provide a further understanding of the invention and are incorporated in and constitute a part of this specification illustrate embodiments of the invention and together with the description serve to explain various principles of the invention.

FIG. 1 illustrates an example of an overall structure of a NR system to which a method proposed by the present specification is applicable.

FIG. 2 illustrates a relation between an uplink frame and a downlink frame in a wireless communication system to which a method proposed by the present specification is applicable.

FIG. 3 illustrates an example of a resource grid supported in a wireless communication system to which a method proposed by the present specification is applicable.

FIG. 4 illustrates examples of a resource grid per antenna port and numerology to which a method proposed by the present specification is applicable.

FIG. 5 illustrates an example of a self-contained slot structure to which a method proposed by the present specification is applicable.

FIG. 6 illustrates an example of component carriers and carrier aggregation in a wireless communication system to which the present invention is applicable.

FIG. 7 illustrates examples of deployment scenarios considering carrier aggregation in an NR system.

FIG. 8 is a flowchart illustrating an operation method of a UE performing a method proposed by the present specification.

FIG. 9 illustrates a block diagram of a wireless communication device to which methods proposed in this specification may be applied.

FIG. 10 illustrates another block diagram of a wireless communication device to which methods proposed in this specification may be applied.

[Best Mode for Invention]

Reference will now be made in detail to embodiments of the invention, examples of which are illustrated in the accompanying drawings. A detailed description to be disclosed below together with the accompanying drawing is to describe exemplary embodiments of the present invention and not to describe a unique embodiment for carrying out the present invention. The detailed description below includes details to provide a complete understanding of the present invention. However, those skilled in the art know that the present invention can be carried out without the details.

In some cases, in order to prevent a concept of the present invention from being ambiguous, known structures and devices may be omitted or illustrated in a block diagram format based on core functions of each structure and device.

In the present disclosure, a base station (BS) means a terminal node of a network directly performing communication with a terminal. In the present disclosure, specific operations described to be performed by the base station may be performed by an upper node of the base station, if necessary or desired. That is, it is obvious that in the network consisting of multiple network nodes including the base station, various operations performed for communication with the terminal can be performed by the base station or network nodes other than the base station. The 'base station (BS)' may be replaced with terms such as a fixed station, Node B, evolved-NodeB (eNB), a base transceiver system (BTS), an access point (AP), gNB (general NB), and the like. Further, a 'terminal' may be fixed or movable and may be replaced with terms such as user equipment (UE), a mobile station (MS), a user terminal (UT), a mobile subscriber station (MSS), a subscriber station (SS), an advanced mobile station (AMS), a wireless terminal (WT), a machine-type communication (MTC) device, a machine-to-machine (M2M) device, a device-to-device (D2D) device, and the like.

In the present disclosure, downlink (DL) means communication from the base station to the terminal, and uplink (UL) means communication from the terminal to the base station. In the downlink, a transmitter may be a part of the base station, and a receiver may be a part of the terminal. In the uplink, the transmitter may be a part of the terminal, and the receiver may be a part of the base station.

Specific terms used in the following description are provided to help the understanding of the present invention, and may be changed to other forms within the scope without departing from the technical spirit of the present invention.

The following technology may be used in various wireless access systems, such as code division multiple access (CDMA), frequency division multiple access (FDMA), time division multiple access (TDMA), orthogonal frequency division multiple access (OFDMA), single carrier-FDMA (SC-FDMA), non-orthogonal multiple access (NOMA), and the like. The CDMA may be implemented by radio technology such as universal terrestrial radio access (UTRA) or CDMA2000. The TDMA may be implemented by radio technology such as global system for mobile communications (GSM)/general packet radio service (GPRS)/enhanced data rates for GSM evolution (EDGE). The OFDMA may be implemented as radio technology such as IEEE 802.11 (Wi-Fi), IEEE 802.16 (WiMAX), IEEE 802-20, E-UTRA (evolved UTRA), and the like. The UTRA is a part of a universal mobile telecommunication system (UMTS). 3rd generation partnership project (3GPP) long term evolution (LTE), as a part of an evolved UMTS (E-UMTS) using E-UTRA, adopts the OFDMA in the downlink and the SC-FDMA in the uplink. LTE-A (advanced) is the evolution of 3GPP LTE.

Further, 5G new radio (NR) defines enhanced mobile broadband (eMBB), massive machine type communications (mMTC), ultra-reliable and low latency communications (URLLC), and vehicle-to-everything (V2X) based on usage scenario.

A 5G NR standard is divided into standalone (SA) and non-standalone (NSA) depending on co-existence between a NR system and a LTE system.

The 5G NR supports various subcarrier spacings and supports CP-OFDM in the downlink and CP-OFDM and DFT-s-OFDM (SC-OFDM) in the uplink.

Embodiments of the present invention can be supported by standard documents disclosed in at least one of IEEE 802, 3GPP, and 3GPP2 which are the wireless access systems. That is, steps or parts in embodiments of the present invention which are not described to clearly show the technical spirit of the present invention can be supported by the standard documents. Further, all terms described in the present disclosure can be described by the standard document.

3GPP LTE/LTE-A/New RAT (NR) is primarily described for clear description, but technical features of the present invention are not limited thereto.

In the present specification, 'A and/or B' may be interpreted in the same sense as 'including at least one of A or B'.

Definition of terms

eLTE eNB: The eLTE eNB is the evolution of eNB that supports connectivity to EPC and NGC.

gNB: A node which supports the NR as well as connectivity to NGC.

New RAN: A radio access network which supports either NR or E-UTRA or interfaces with the NGC.

Network slice: A network slice is a network created by the operator customized to provide an optimized solution for a specific market scenario which demands specific requirements with end-to-end scope.

Network function: A network function is a logical node within a network infrastructure that has well-defined external interfaces and well-defined functional behaviour.

NG-C: A control plane interface used on NG2 reference points between new RAN and NGC.

NG-U: A user plane interface used on NG3 references points between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: A termination point of NG-U interface.

Numerology: The numerology corresponds to one subcarrier spacing in a frequency domain. By scaling a reference subcarrier spacing by an integer N, different numerologies can be defined.

NR: NR radio access or new radio.

General system

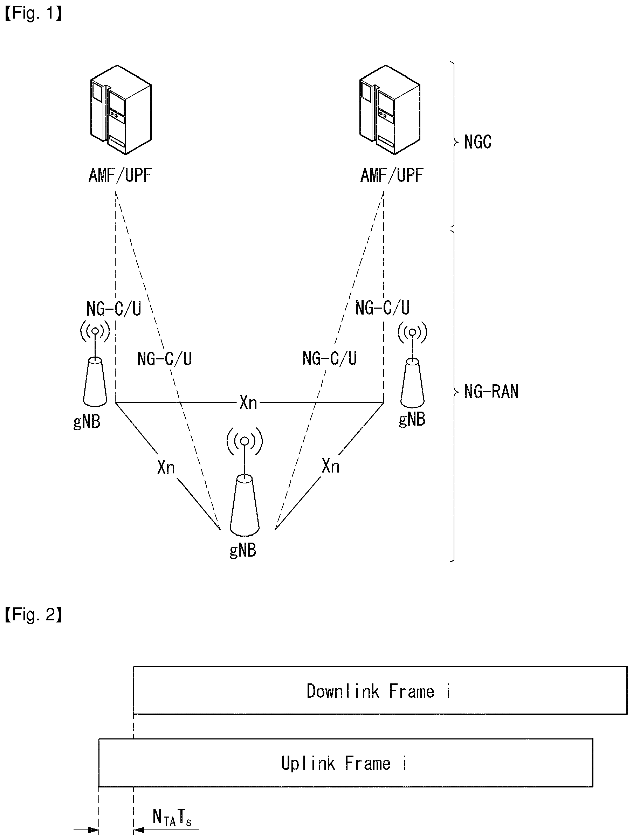

FIG. 1 illustrates an example of an overall structure of a NR system to which a method proposed by the present specification is applicable.

Referring to FIG. 1, an NG-RAN is composed of gNBs that provide an NG-RA user plane (new AS sublayer/PDCP/RLC/MAC/PHY) and a control plane (RRC) protocol terminal for a UE (User Equipment).

The gNBs are connected to each other via an Xn interface.

The gNBs are also connected to an NGC via an NG interface.

More specifically, the gNBs are connected to an access and mobility management function (AMF) via an N2 interface and a User Plane Function (UPF) via an N3 interface.

NR (New Rat) Numerology and frame structure

In the NR system, multiple numerologies may be supported. The numerologies may be defined by subcarrier spacing and a CP (Cyclic Prefix) overhead. Spacing between the plurality of subcarriers may be derived by scaling basic subcarrier spacing into an integer N (or $\mu$). In addition, although a very low subcarrier spacing is assumed not to be used at a very high subcarrier frequency, a numerology to be used may be selected independent of a frequency band.

In addition, in the NR system, a variety of frame structures according to the multiple numerologies may be supported.

Hereinafter, an orthogonal frequency division multiplexing (OFDM) numerology and a frame structure, which may be considered in the NR system, will be described.

A plurality of OFDM numerologies supported in the NR system may be defined as in Table 1.

[Table 1]

| $\mu$ | $\Delta f = 2^{\mu} \cdot 15$ [kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |
| 5 | 480 | Normal |

Regarding a frame structure in the NR system, a size of various fields in the time domain is expressed as a multiple of a time unit of $T_s$: $=1/(\Delta f_{max} \cdot N_f)$. In this case, $\Delta f_{max} = 480 \cdot 10^3$, and $N_f = 4096$. DL and UL transmission is configured as a radio frame having a section of $T_f = (\Delta f_{max} N_f/100) \cdot T_s = 10$ms. The radio frame is composed of ten subframes each having a section of $T_{sf} = (\Delta f_{max} N_f/1000) \cdot T_s = 1$ms. In this case, there may be a set of UL frames and a set of DL frames.

FIG. 2 illustrates a relation between an uplink frame and a downlink frame in a wireless communication system to which a method proposed by the present specification is applicable.

As illustrated in FIG. 2, a UL frame number I from a User Equipment (UE) needs to be transmitted $T_{TA} = N_{TA} T_s$ before the start of a corresponding DL frame in the UE.

Regarding the numerology $\mu$, slots are numbered in ascending order of $n_{\mathrm{s}}^{\mu} \in \left\{0,...,N_{\mathrm{subframe}}^{\mathrm{slots},\mu} - 1\right\}$ in a subframe, and in ascending order of $n_{\mathrm{s,f}}^{\mu} \in \left\{0,...,N_{\mathrm{frame}}^{\mathrm{slots},\mu} - 1\right\}$ in a radio frame. One slot is composed of continuous OFDM symbols of $N_{\mathrm{symb}}^{\mu}$, and $N_{\mathrm{symb}}^{\mu}$ is determined depending on a numerology in use and slot configuration. The start of slots $n_{\mathrm{s}}^{\mu}$ in a subframe is temporally aligned with the start of OFDM symbols $n_{\mathrm{s}}^{\mu} N_{\mathrm{symb}}^{\mu}$ in the same subframe.

Not all UEs are able to transmit and receive at the same time, and this means that not all OFDM symbols in a DL slot or an UL slot are available to be used.

Table 2 shows the number of OFDM symbols per slot for a normal CP in the numerology $\mu$, and Table 3 shows the number of OFDM symbols per slot for an extended CP in the numerology $\mu$.

[Table 2]

| $\mu$ | Slot configuration | | | | | |
|---|---|---|---|---|---|---|
| | 0 | | | 1 | | |
| | $N_{\mathrm{symb}}^{\mu}$ | $N_{\mathrm{frame}}^{\mathrm{slots},\mu}$ | $N_{\mathrm{subframe}}^{\mathrm{slots},\mu}$ | $N_{\mathrm{symb}}^{\mu}$ | $N_{\mathrm{frame}}^{\mathrm{slots},\mu}$ | $N_{\mathrm{subframe}}^{\mathrm{slots},\mu}$ |
| 0 | 14 | 10 | 1 | 7 | 20 | 2 |
| 1 | 14 | 20 | 2 | 7 | 40 | 4 |
| 2 | 14 | 40 | 4 | 7 | 80 | 8 |
| 3 | 14 | 80 | 8 | - | - | - |
| 4 | 14 | 160 | 16 | - | - | - |
| 5 | 14 | 320 | 32 | - | - | - |

[Table 3]

| $\mu$ | Slot configuration | | | | | |
|---|---|---|---|---|---|---|
| | 0 | | | 1 | | |
| | $N_{\mathrm{symb}}^{\mu}$ | $N_{\mathrm{frame}}^{\mathrm{slots},\mu}$ | $N_{\mathrm{subframe}}^{\mathrm{slots},\mu}$ | $N_{\mathrm{symb}}^{\mu}$ | $N_{\mathrm{frame}}^{\mathrm{slots},\mu}$ | $N_{\mathrm{subframe}}^{\mathrm{slots},\mu}$ |
| 0 | 12 | 10 | 1 | 6 | 20 | 2 |
| 1 | 12 | 20 | 2 | 6 | 40 | 4 |
| 2 | 12 | 40 | 4 | 6 | 80 | 8 |
| 3 | 12 | 80 | 8 | - | - | - |
| 4 | 12 | 160 | 16 | - | - | - |
| 5 | 12 | 320 | 32 | - | - | - |

NR physical resource

Regarding physical resources in the NR system, an antenna port, a resource grid, a resource element, a resource block, a carrier part, etc. may be considered.

Hereinafter, the above physical resources possible to be considered in the NR system will be described in more detail.

First, regarding an antenna port, the antenna port is defined such that a channel over which a symbol on one antenna port is transmitted can be inferred from another channel over which a symbol on the same antenna port is transmitted. When large-scale properties of a channel received over which a symbol on one antenna port can be inferred from another channel over which a symbol on another antenna port is transmitted, the two antenna ports may be in a QC/QCL (quasi co-located or quasi co-location) relationship. Herein, the large-scale properties may include at least one of Delay spread, Doppler spread, Frequency shift, Average received power, and Received Timing.

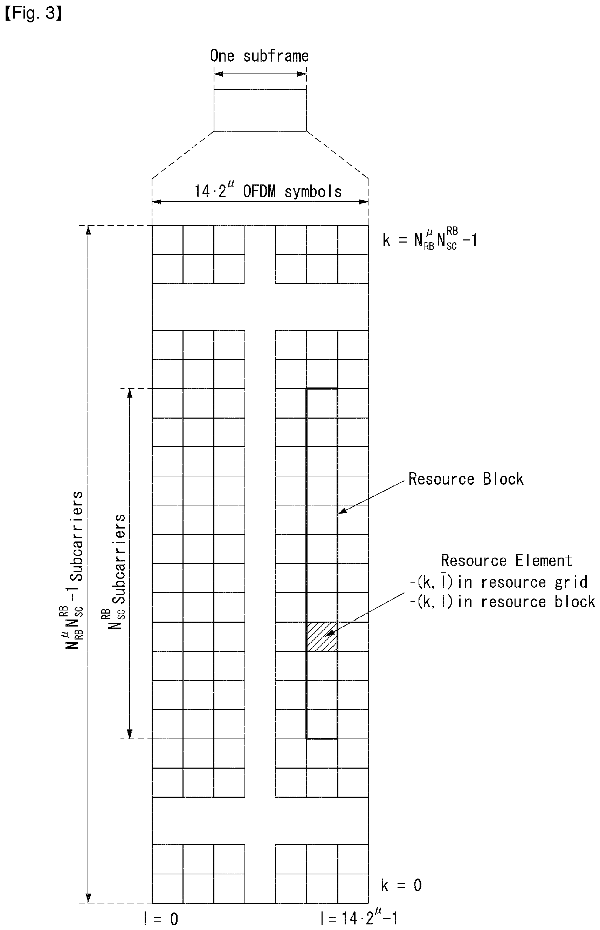

FIG. 3 illustrates an example of a resource grid supported in a wireless communication system to which a method proposed by the present specification is applicable.

Referring to FIG. 3, a resource grid is composed of $N_{RB}^{\mu} N_{sc}^{RB}$ subcarriers in a frequency domain, each subframe composed of $14 \cdot 2\mu$ OFDM symbols, but the present disclosure is not limited thereto.

In the NR system, a transmitted signal is described by one or more resource grids, composed of $N_{RB}^{\mu} N_{sc}^{RB}$ subcarriers, and $2^{\mu} N_{symb}^{(\mu)}$ OFDM symbols Herein, $N_{RB}^{\mu} \leq N_{RB}^{\max,\mu}$. The above $N_{RB}^{\max,\mu}$ indicates the maximum transmission bandwidth, and it may change not just between numerologies, but between UL and DL.

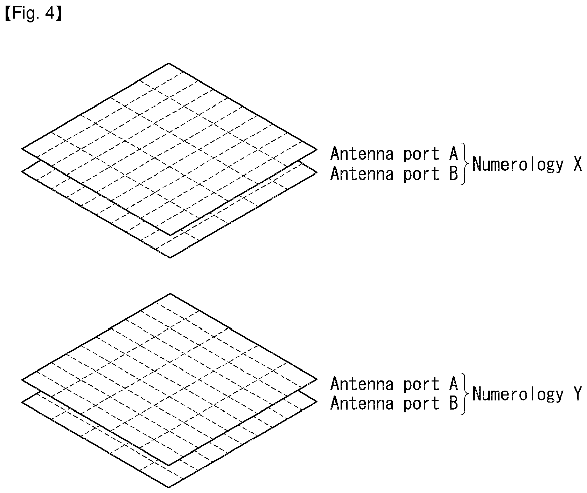

In this case, as illustrated in FIG. 4, one resource grid may be configured per the numerology $\mu$ and an antenna port p.

FIG. 4 illustrates examples of a resource grid per antenna port and numerology to which a method proposed by the present specification is applicable.

Each element of the resource grid for the numerology $\mu$ and the antenna port p is indicated as a resource element, and may be uniquely identified by an index pair $(k,\bar{l})$. Herein, $k = 0,...,N_{RB}^{\mu} N_{sc}^{RB} - 1$ is an index in the frequency domain, and $\bar{l} = 0,...,2^{\mu} N_{symb}^{(\mu)} - 1$ indicates a location of a symbol in a subframe. To indicate a resource element in a slot, the index pair $(k,\bar{l})$ is used, where $l = 0,...,N_{symb}^{\mu} - 1$.

The resource element $(k,\bar{l})$ for the numerology $\mu$ and the antenna port p corresponds to a complex value $a_{k,\bar{l}}^{(p,\mu)}$. When there is no risk of confusion or when a specific antenna port or numerology is specified, the indexes p and $\mu$ may be dropped and thereby the complex value may become $a_{k,\bar{l}}^{(p)}$ or $a_{k,l}$.

In addition, a physical resource block is defined as $N_{sc}^{RB} = 12$ continuous subcarriers in the frequency domain. In the frequency domain, physical resource blocks may be numbered from 0 to $N_{RB}^{\mu} - 1$. At this point, a relationship between the physical resource block number $n_{PRB}$ and the resource elements $(k,l)$ may be given as in Equation 1.

【Equation 1】

$$n_{PRB} = \left\lfloor \frac{k}{N_{sc}^{RB}} \right\rfloor$$

In addition, regarding a carrier part, a UE may be configured to receive or transmit the carrier part using only a subset of a resource grid. At this point, a set of resource blocks which the UE is configured to receive or transmit are numbered from 0 to $N_{URB}^{\mu} - 1$ in the frequency region.

Self-contained slot structure

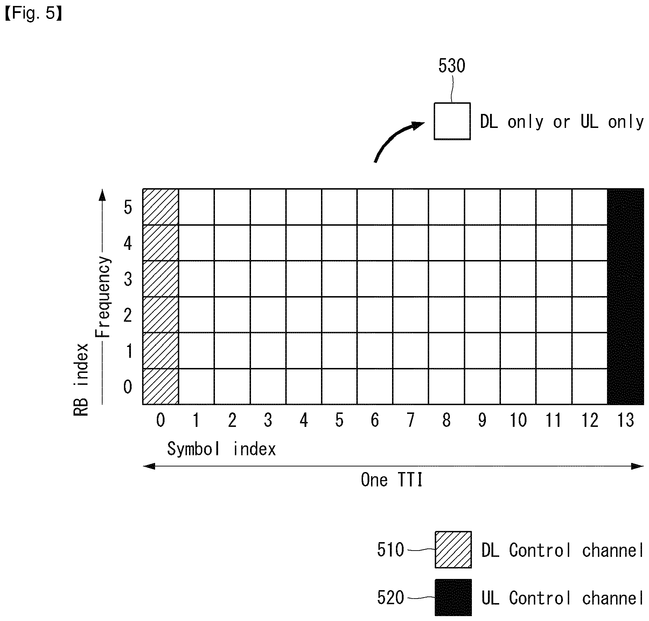

To minimize latency of data transmission in a TDD system, 5G new RAT (NR) has considered a self-contained slot structure illustrated in FIG. 5.

That is, FIG. 5 illustrates an example of a self-contained slot structure to which a method proposed by the present specification is applicable.

In FIG. 5, a hatched portion 510 denotes a downlink control region, and a black portion 520 denotes an uplink control region.

A non-marked portion 530 may be used for downlink data transmission or uplink data transmission.

Such a structure may be characterized in that DL transmission and UL transmission are sequentially performed in one slot, DL data is sent in one slot, and UL Ack/Nack is also transmitted and received in one slot.

Such a slot may be defined as a 'self-contained slot'.

That is, through the slot structure, the base station reduces the time it takes to retransmit data to the UE when a data transmission error occurs, and thus can minimize latency of final data delivery.

In the self-contained slot structure, the base station and the UE require a time gap in a process for switching from a transmission mode to a reception mode or a process for switching from the reception mode to the transmission mode.

To this end, in the corresponding slot structure, some OFDM symbols at time of switching from DL to UL are configured as a guard period (GP).

Carrier Aggregation

In embodiments of the present invention, a communication environment to be considered includes all multi-carrier supporting environments. That is, a multi-carrier system or a carrier aggregation (CA) system used in the present invention refers to a system that aggregates and uses one or more component carriers (CCs) with a bandwidth less than a target band when configuring a target wideband, in order to support a wideband.

In the present invention, multi-carrier means aggregation of carriers (or carrier aggregation). In this case, the aggregation of carriers means both aggregation between continuous carriers and aggregation between non-contiguous carriers. Further, the number of component carriers aggregated between downlink and uplink may be differently set. A case where the number of downlink component carriers (hereinafter referred to as "DL CC") and the number of uplink component carriers (hereinafter, referred to as "UL CC") are the same is referred to as "symmetric aggregation", and a case where the number of downlink component carriers and the number of uplink component carriers are different is referred to as "asymmetric aggregation". The carrier aggregation may be used interchangeably with a term such as bandwidth aggregation or spectrum aggregation.

Carrier aggregation configured by combining two or more component carriers aims at supporting up to a bandwidth of 100 MHz in the LTE-A system. When one or more carriers with a bandwidth smaller than a target band are combined, a bandwidth of the combined carriers may be limited to a bandwidth used in an existing system in order to maintain backward compatibility with the existing IMT system. For example, the existing 3GPP LTE system supports bandwidths of {1.4, 3, 5, 10, 15, 20} MHz, and a 3GPP LTE-advanced (i.e., LTE-A) system may be configured to support a bandwidth greater than 20 MHz by using only the bandwidths for compatibility with the existing system. Further, the carrier aggregation system used in the preset invention may be configured to support the carrier aggregation by defining a new bandwidth regardless of the bandwidth used in the existing system.

The LTE-A system uses a concept of a cell to manage a radio resource.

An environment of the carrier aggregation may be called a multi-cell environment. The cell is defined as a combination of a pair of a downlink resource (DL CC) and an uplink resource (UL CC), but the uplink resource is not essential. Therefore, the cell may consist of only the downlink resource or both the downlink resource and the uplink resource. When a specific UE has only one configured serving cell, the cell may have one DL CC and one UL CC. However, when the specific UE has two or more configured serving cells, the cells have DL CCs as many as the cells and the number of UL CCs may be equal to or less than the number of DL CCs.

Alternatively, on the contrary, the DL CC and the UL CC may be configured. That is, when the specific UE has multiple configured serving cells, a carrier aggregation environment, in which the number of UL CCs is more than the number of DL CCs, may also be supported. That is, the carrier aggregation may be understood as aggregation of two or more cells each having a different carrier frequency (center frequency). The 'cell' described here needs to be distinguished from a 'cell' as a region which is generally used and is covered by the base station.

The cell used in the LTE-A system includes a primary cell (PCell) and a secondary cell (SCell). The PCell and the SCell may be used as a serving cell. In case of the UE which is in an RRC_CONNECTED state, but does not have the configured carrier aggregation or does not support the carrier aggregation, only one serving cell consisting of only the PCell is present. On the other hand, in case of the UE which is in the RRC_CONNECTED state and has the configured carrier aggregation, one or more serving cells may be present and the PCell and one or more SCells are included in all serving cells.

The serving cell (PCell and SCell) may be configured through an RRC parameter. PhysCellId as a physical layer identifier of the cell has integer values of 0 to 503. SCellIndex as a short identifier used to identify the SCell has integer values of 1 to 7. ServCellIndex as a short identifier used to identify the serving cell (PCell and SCell) has the integer values of 0 to 7. The value of 0 is applied to the PCell, and SCellIndex is previously given for application to the SCell. That is, a cell having a smallest cell ID (or cell index) in ServCellIndex is the PCell.

The PCell means a cell that operates on a primary frequency (or primary CC). The PCell may be used for the UE to perform an initial connection establishment process or a connection re-establishment process and may be designated as a cell indicated in a handover process. Further, the PCell means a cell which is the center of control-related communication among serving cells configured in the carrier aggregation environment. That is, the UE may be allocated and transmit a PUCCH only in a PCell of the corresponding UE and use only the PCell to acquire system information or change a monitoring procedure. An evolved universal terrestrial radio access (E-UTRAN) may change only the PCell for the handover procedure to the UE supporting the carrier aggregation environment by using an RRC connection reconfiguration message RRCConnectionReconfigutaion of higher layer including mobile control information mobilityControlInfo.

The SCell may mean a cell that operates on a secondary frequency (or secondary CC). Only one PCell may be allocated to a specific UE, and one or more SCells may be allocated to the specific UE. The SCell may be configured after RRC connection establishment is achieved and used to provide an additional radio resource. The PUCCH is not present in residual cells, i.e., the SCells other than the PCell among the serving cells configured in the carrier aggregation environment. The E-UTRAN may provide all system information related to an operation of a related cell, which is in an RRC_CONNECTED state, through a dedicated signal when adding the SCells to the UE that supports the carrier aggregation environment. A change of the system information may be controlled by releasing and adding the related SCell, and in this case, the RRC connection reconfiguration message "RRCConnectionReconfigutaion" of higher layer may be used. The E-UTRAN may perform dedicated signaling having a different parameter for each UE rather than broadcasting in the related SCell.

After an initial security activation process starts, the E-UTRAN can add the SCells to the initially configured PCell in the connection establishment process to configure a network including one or more SCells. In the carrier aggregation environment, the PCell and the SCell may operate as the respective component carriers. In embodiments described below, a primary component carrier (PCC) may be used as the same meaning as the PCell, and a secondary component carrier (SCC) may be used as the same meaning as the SCell.

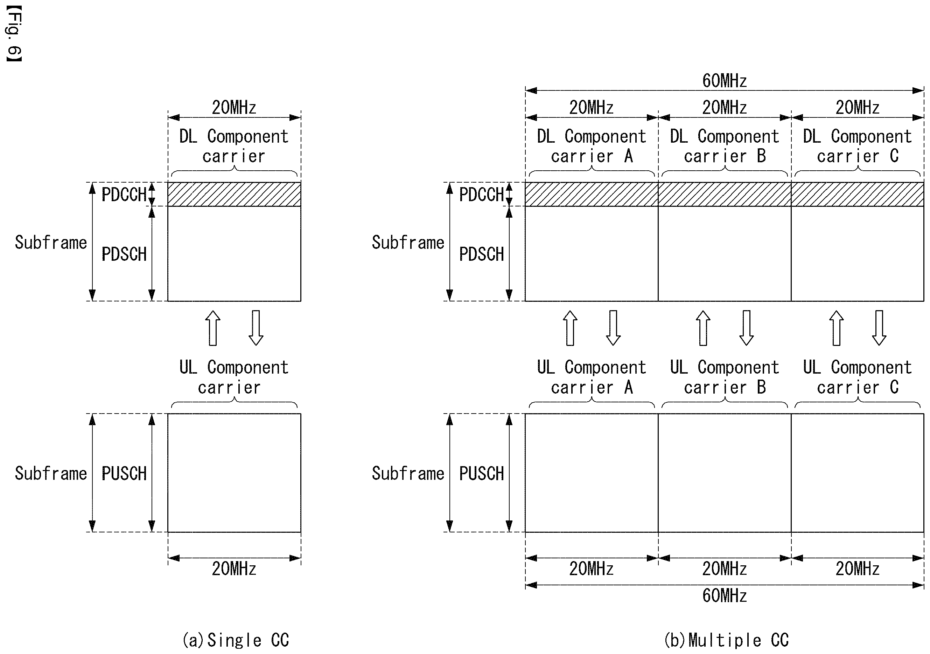

FIG. 6 illustrates an example of component carriers and carrier aggregation in a wireless communication system to which the present invention is applicable.

FIG. 6(a) illustrates a single carrier structure used in the LTE system. A component carrier includes a DL CC and an UL CC. One component carrier may have a frequency range of 20 MHz.

FIG. 6(b) illustrates a carrier aggregation structure used in the LTE-A system. More specifically, FIG. 6(b) illustrates that three component carriers having a frequency magnitude of 20 MHz are combined. Three DL CCs and three UL CCs are provided, but the number of DL CCs and the number of UL CCs are not limited. In the case of carrier aggregation, the UE may simultaneously monitor three CCs, receive downlink signal/data, and transmit uplink signal/data.

If N DL CCs are managed in a specific cell, the network may allocate M (M≤N) DL CCs to the UE. In this case, the UE may monitor only M limited DL CCs and receive the DL signal. Further, the network may prioritize L (L≤M≤N) DL CCs and allocate a primary DL CC to the UE. In this case, the UE has to monitor the L DL CCs. Such a scheme may be equally applied to uplink transmission.

A linkage between a carrier frequency (or DL CC) of a downlink resource and a carrier frequency (or UL CC) of an uplink resource may be indicated by a higher layer message such as a RRC message or system information. For example, a combination of the DL resource and the UL resource may be configured by a linkage defined by system information block type 2 (SIB2). More specifically, the linkage may mean a mapping relation between the DL CC, on which a PDCCH carrying a UL grant is transmitted, and the UL CC using the UL grant, and mean a mapping relation between the DL CC (or UL CC) on which data for HARQ is transmitted and the UL CC (or DL CC) on which HARQ ACK/NACK signal is transmitted.

If one or more SCells are configured to the UE, the network may activate or deactivate the configured SCell(s). The PCell is always activated. The network activates or deactivates the SCell(s) by sending an activation/deactivation MAC control element.

The activation/deactivation MAC control element has a fixed size and consists of a single octet including seven C-fields and one R-field. The C-field is configured for each SCell index (SCellIndex), and indicates the activation/deactivation state of the SCell. When a value of the C-field is set to '1', it indicates that a SCell having a corresponding SCell index is activated. When a value of the C-field is set to '0', it indicates that a SCell having a corresponding SCell index is deactivated.

Further, the UE maintains a timer sCellDeactivationTimer per configured SCell and deactivates the associated SCell when the timer expires. The same initial timer value is applied to each instance of the timer sCellDeactivationTimer and is configured by RRC signaling. When the SCell(s) are added or after handover, initial SCell(s) are in a deactivation state.

The UE performs the following operation on each of the configured SCell(s) in each TTI.

- If the UE receives an activation/deactivation MAC control element that activates the SCell in a specific TTI (subframe n), the UE activates the SCell in a TTI (subframe n+8 or thereafter) corresponding to fixed timing and (re)starts a timer related to the corresponding SCell. What the UE activates the SCell means that the UE applies a normal SCell operation, such as sounding reference signal (SRS) transmission on the SCell, channel quality indicator (CQI)/precoding matrix indicator (PMI)/rank indication (RI)/precoding type indicator (PTI) reporting for the SCell, PDCCH monitoring on the SCell, and PDCCH monitoring for the SCell.

- If the UE receives an activation/deactivation MAC control element that deactivates the SCell in a specific TTI (subframe n) or if a timer related to a specific TTI (subframe n)-activated SCell expires, the UE deactivates the SCell in a TTI (subframe n+8 or thereafter) corresponding to fixed timing, stops the timer of the corresponding SCell, and flushes all of HARQ buffers related to the corresponding SCell.

- If a PDCCH on the activated SCell indicates an uplink grant or a downlink assignment or if a PDCCH on a serving cell scheduling the activated SCell indicates an uplink grant or a downlink assignment for the activated SCell, the UE restarts a timer related to the corresponding SCell.

- If the SCell is deactivated, the UE does not transmit the SRS on the SCell, does not report CQI/PMI/RI/PTI for the SCell, does not transmit UL-SCH on the SCell, and does not monitor the PDCCH on the SCell.

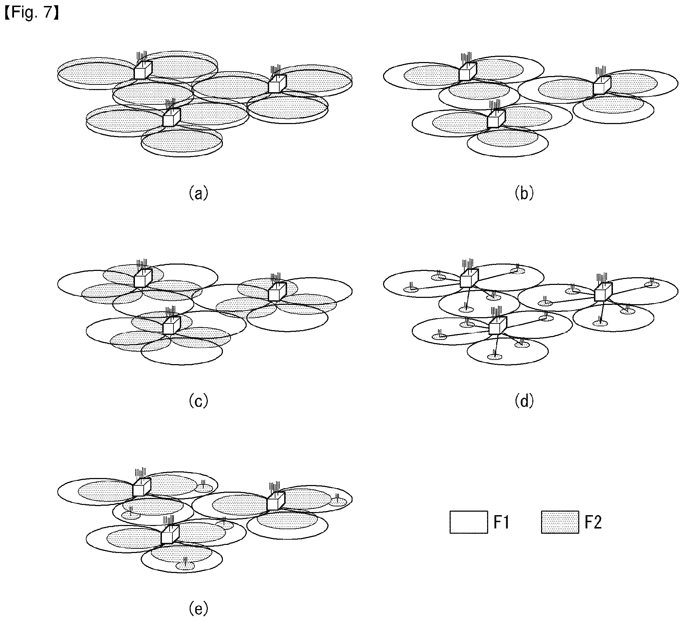

The above-described carrier aggregation has been described based on the LTE/LTE-A system, but it is for convenience of description and can be extended and applied to the 5G NR system in the same or similar manner. In particular, carrier aggregation deployment scenarios that may be considered in the 5G NR system may be the same as FIG. 7.

FIG. 7 illustrates examples of deployment scenarios considering carrier aggregation in an NR system.

Referring to FIG. 7, F1 and F2 may respectively mean a cell configured to a first frequency (or a first frequency band, a first carrier frequency, a first center frequency) and a cell configured as a second frequency (or a second frequency band, a second carrier frequency or a second center frequency).

FIG. 7(a) illustrates a first CA deployment scenario. As illustrated in FIG. 7(a), the F1 cell and the F2 cell may be co-located and overlaid. In this case, both the two layers can provide sufficient coverage, and mobility can be supported on the two layers. The first CA deployment scenario may include a case where the F1 cell and the F2 cell are present in the same band. In the first CA deployment scenario, it is expected that aggregation is possible between the overlaid F1 and F2 cells.

FIG. 7(b) illustrates a second CA deployment scenario. As illustrated in FIG. 7(b), the F1 cell and the F2 cell may be co-located and overlaid, but the F2 cell may support smaller coverage due to a larger path loss. In this case, only the F1 cell provides sufficient coverage, and the F2 cell may be used to improve throughput. In this case, mobility may be performed based on the coverage of the F1 cell. The second CA deployment scenario may include a case where the F1 cell and the F2 cell are present in different bands (e.g., the F1 cell is present in {800 MHz, 2 GHz} and the F2 cell is present in {3.5 GHz}). In the second CA deployment scenario, it is expected that aggregation is possible between the overlaid F1 and F2 cells.

FIG. 7(c) illustrates a third CA deployment scenario. As illustrated in FIG. 7(c), the F1 cell and the F2 cell are co-located and overlaid, but antennas of the F2 cell may be directed to boundaries of the F1 cell so that cell edge throughput is increased. In this case, the F1 cell provides sufficient coverage, but the F2 cell may potentially have holes due to a larger path loss. In this case, mobility may be performed based on the coverage of the F1 cell. The third CA deployment scenario may include a case where the F1 cell and the F2 cell are present in different bands (e.g., the F1 cell is present in {800 MHz, 2 GHz} and the F2 cell is present in {3.5 GHz}). In the third CA deployment scenario, it is expected that the F1 and F2 cells of the same base station (e.g., eNB) can be aggregated in a region where coverage overlaps.

FIG. 7(d) illustrates a fourth CA deployment scenario. As illustrated in FIG. 7(d), the F1 cell provides macro coverage, and F2 remote radio heads (RRHs) may be used to improve throughput at hot spots. In this case, mobility may be performed based on the coverage of the F1 cell. The fourth CA deployment scenario may include both a case where the F1 cell and the F2 cell correspond to DL non-contiguous carriers on the same band (e.g., 1.7 GHz) and a case where the F1 cell and the F2 cell are present on different bands (e.g., the F1 cell is present in {800 MHz, 2 GHz} and the F2 cell is present in {3.5 GHz}). In the fourth CA deployment scenario, it is expected that the F2 cells (i.e., RRHs) can be aggregated with the F1 cell(s) (i.e., macro cell(s)) underlying the F2 cells.

FIG. 7(e) illustrates a fifth CA deployment scenario. The fifth CA deployment scenario is similar to the second CA deployment scenario, but frequency selective repeaters may be deployed so that coverage can be extended for one of the carrier frequencies. In the fifth CA deployment scenario, it is expected that the F1 and F2 cells of the same base station can be aggregated in a region where coverage overlaps.

A reception timing difference at the physical layer of UL grants and DL assignments for the same TTI (e.g., depending on the number of control symbols, propagation and deployment scenario) although it is caused by different serving cells may not affect a MAC operation. The UE may need to cope with a relative propagation delay difference of up to 30 us among the CCs to be aggregated in both intra-band non-contiguous CA and inter-band non-contiguous CS. This may mean that the UE needs to cope with a delay spread of up to 30.26 us among the CCs monitored at a receiver because a time alignment of the base station is specified to be up to 0.26 us. This may also mean that the UE have to cope with a maximum uplink transmission timing difference between TAGs of 36.37 us for inter-band CA with multiple TAGs.

When a CA is deployed, frame timing and a system frame number (SFN) may be aligned across aggregated cells.

An NR system may support a physical uplink control channel (PUCCH), that is, a physical channel for transmitting uplink control information (UCI) including information, such as hybrid automatic repeat request-acknowledgement (HARQ-ACK), a scheduling request (SR), and channel state information (CSI).

In this case, the PUCCH may be divided into a small-payload PUCCH supporting small UCI payload (e.g., 1~2-bit UCI) and a large-payload PUCCH supporting a large UCI payload (e.g., more than 2 bits and up to hundreds of bits) depending on UCI payload.

In addition, the small-payload PUCCH and the large-payload PUCCH may be divided into a short PUCCH having short duration (e.g., 1~2-symbol duration) and a long PUCCH having long duration (e.g., 4~14-symbol duration).

In this case, the long PUCCH may be chiefly used to transmit medium/large UCI payload or to improve coverage of small UCI payload.

In addition, if it is necessary to extend coverage compared to a long PUCCH, the long PUCCH may support a multi-slot long PUCCH in which the same UCI information is transmitted in a plurality of slots.

For example, if it is impossible to secure coverage under a given UCI payload and code rate, a terminal may secure coverage through a gain according to repetitive transmission using a multi-slot long PUCCH.

In this case, the PUCCHs may be classified based on a transmittable UCI payload size, a PUCCH structure (e.g., PUCCH length in symbols) or a multiplexing capacity. In addition, the PUCCHs may be defined in a plurality of PUCCH formats and supported.

For example, a PUCCH format may be configured with a small-payload short PUCCH, a small-payload long PUCCH, a large-payload short PUCCH, a large-payload long PUCCH, a medium-payload long PUCCH, etc.

In this case, medium/large UCI payload transmitted in a long PUCCH may be configured with one of the UCI information (HARQ-ACK, SR, CSI) or a plurality of combinations thereof.

Such a case is represented as "multiple UCI on long PUCCH", for convenience of description.

Furthermore, a plurality of UCI information transmitted at the same time in a long PUCCH may be HARQ-ACK (or HARQ-ACK and an SR) and CSI simultaneous transmission, for example.

Hereinafter, in this specification, an operation supporting multiple UCI on long PUCCH is described specifically.

UCI information partitioning for multiple UCI on long PUCCH support

First, UCI partitioning for multiple UCI transmission support on a long PUCCH is described.

If multiple UCI payload includes a CSI report, payload may be variable based on a rank number, etc. determined by a UE.

In such a case, in order to avoid blind detection (BD) in a base station (e.g., gNB (next generation Node B)), a UE may transmit, to a gNB, information (e.g., rank information) on which a UCI payload size may be determined directly or indirectly.

Furthermore, as one of the methods, a UE may divide the entire variable-size UCI information into part 1 UCI, that is, a fixed part, and part 2 UCI, that is, a variable part, and may separately encode the part 1 and part 2 UCI.

In addition, the UE may include rank information on which the size of the part 2 UCI may be determined in the fixed-size part 1 UCI, may encode the UCI, and may transmit the encoded UCI to a gNB.

UCI to RE mapping for multiple UCI on long PUCCH support

Next, UCI to RE mapping for supporting multiple UCI transmission on long PUCCH is described below.

This is for the case where CSI for PUCCH transmission of variable-size CSI report described above is configured to be partitioned into fixed size part 1 CSI and variable-size part 2 CSI.

In this case, the gNB can grasp a payload size of the part 2 CSI only when successfully decoding the part 1 CSI, and attempt the decoding based on this.

Thus, it can be said that the part 1 CSI has priority over the part 2 CSI in terms of decoding order and performance.

Accordingly, when multiple UCI payloads are configured to support the multiple UCI on long PUCCH, HARQ-ACK (or HARQ-ACK and SR) information with high importance together with the part 1 CSI may configure part 1 UCI and may be jointly encoded, and part 2 UCI may consist of only the part 2 CSI and may be separately encoded.

For reason of the performance priority or the like described above, RE mapping of the part 1 UCI may be performed so that the part 1 UCI is preferentially as close as possible to a PUCCH demodulation reference signal (DMRS).

After the RE mapping of the part 1 UCI through the above method, RE mapping of the part 2 UCI may be performed in a remaining PUCCH region.

The above-described RE mapping operation may be performed by the UE, and may be performed by the gNB when UCI can be interpreted as downlink control information (DCI).

In this case, a basic unit of the RE mapping operation is a modulation symbol.

Thus, in order to faithfully support a RE mapping method by separating the part 1 UCI and the part 2 UCI, part 1 and part 2 UCI coded bits have to be separated on a per modulation symbol basis.

To this end, the part 1 UCI coded bits and/or the part 2 UCI coded bits for supporting the multiple UCI on long PUCCH may be partitioned to be divided by a multiple of modulation order Qm.

As a method for generating the part 1 UCI coded bit so that the part 1 UCI coded bit is the multiple of the Qm, the following method may be considered.

A maximum code rate Rmax which is allowed per PUCCH format may be previously configured to the UE via higher layer signaling, and the UE may apply a code rate less than the maximum code rate Rmax upon actual UCI transmission.

In this case, when a size N_p1/Rmax of the part 1 UCI coded bits calculated considering part 1 UCI payload size N_p1 and Rmax is not the multiple of the Qm, i.e., when (N_p1/Rmax) mod Qm ≠ 0, rate matching may be performed so that the size N_p1/Rmax is the multiple of the Qm.

In embodiments, the rate matching means an output operation performed so that a bit size of the part 1 UCI coded bit is the multiple of the Qm when a channel coding output buffer (e.g., circular buffer) outputs the part 1 UCI coded bit.

In addition to the rate matching operation, a final output may be the multiple of the Qm by performing circular repetition in a part 1 UCI coded bit sequence generated based on the N_p1/Rmax, or repeating a last part of the part 1 UCI coded bit sequence, or padding '0', '1', or a random number.

Further, some (e.g., initial bit(s) of the part 2 UCI coded bits) of the part 2 UCI coded bits may be used as padding bit(s).

In the same manner as the part 1 UCI coded bits, the part 2 UCI coded bits may be configured to be the multiple of the Qm through the same method.

The method described above may be performed by the following steps (1) to (4) which are performed by the UE.

(1) The total number $N_t$ of UCI coded bits that can be transmitted to PUCCH from configured PUCCH resource parameters may be calculated using the following Equation 2.

【Equation 2】

$$N_t = N_{sym} \times N_{RB} \times N_{SC} \times Q_m$$

In Equation 2, $N_{sym}$ is the number of transmittable PUCCH symbols of configured UCI, $N_{RB}$ is the number of configured PUCCH RBs, $N_{SC}$ is the number of subcarriers in 1 RB (e.g., $N_{SC}$ = 12), and $Q_m$ is modulation order (e.g., 2 for QPSK).

(2) Part 1 UCI coded bit size N_c1 within range not exceeding $N_t$ from the Part 1 UCI payload and the Rmax may be determined using the following Equation 3 (in this instance, N_c1 is configured to be the multiple of the Qm).

【Equation 3】

$$N\_c1 = \min(N_t, \lceil N\_p1/R_{max}/Q_m \rceil \times Q_m)$$

In Equation 3, N_p1 is part 1 UCI payload size, $R_{max}$ is a configured maximum code rate, and ⌈⌉ means a ceiling operation.

(3) Part 2 UCI coded bit size N_c2 from $N_t$ and N_c1 may be determined using the following Equation 4.

【Equation 4】

$$N\_c2 = N_t - N\_c1$$

(4) The UE individually generates the part 1 UCI coded bits and the part 2 UCI coded bits in conformity with N_c1 and N_c2 using the method (rate mating, padding, etc.) for generating the part 1 UCI coded bit so that the part 1 UCI coded bit is the multiple of the $Q_m$, and then performs the RE mapping via modulation (e.g., QPSK modulation).

Resource determination method for multiple UCI on long PUCCH support

Next, a method of determining a resource for multiple UCI transmission support on a long PUCCH is described.
For a resource determination method when multiple UCI (e.g., HARQ-ACK (or HARQ-ACK and SR) and CSI) is transmitted at the same time, the following two cases (Case 1, Case 2) may be taken into consideration.
For the two cases to be described later, a UE may be previously configured with a maximum code rate (Rmax) permitted for each PUCCH format through higher layer signaling, and may apply a code rate (R) smaller than the Rmax upon actual UCI transmission.

(Case 1)

Case 1 is a case where multiple UCI is transmitted in a large-payload long PUCCH configured for HARQ-ACK. (a case where a HARQ-ACK resource is indicated through downlink control information (DCI))
In the case of Case 1, a UE may be previously configured with a plurality of PUCCH resource sets through higher layer signaling, and may select one of the plurality of PUCCH resource sets based on a total UCI payload size (N_p).
In this case, the selected PUCCH resource set may include a plurality of PUCCH resources.
In Case 1, a PUCCH resource(s) within a PUCCH resource set may be indicated through the HARQ-ACK resource indicator of a DCI field in which a PDSCH corresponding to a HARQ-ACK bit is scheduled.
Furthermore, if the number of PUCCH resources within a within a PUCCH resource set is many, a gNB may indicate a PUCCH resource within the PUCCH resource set with respect to a UE through an implicit indication method pr a combination of DCI and implicit indication in order to reduce DCI overhead.
For example, the implicit indication method may be a method of determining a PUCCH resource based on a control channel element (CCE) index of PDSCH scheuling DCI.
In this case, the number of RBs used by a UE for multiple UCI on long PUCCH transmission may be determined by the entire UCI payload size (N_p) and a maximum code rate (Rmax).
The determined value may be different from the number of RBs allocated through the PUCCH resource.

(Case 2)

Case 2 is a case where multiple UCI is transmitted in a large-payload long PUCCH configured for a CSI report. (a case where a HARQ-ACK resource cannot be indicated through DCI)
In the case of Case 2, a UE may be previously configured with a plurality of PUCCH resources for a CSI report through higher layer signaling, and may select one of the plurality of PUCCH resources based on a combination of the entire UCI payload size (N_p) and a maximum code rate (Rmax).
For example, the number of REs capable of PUCCH transmission allocated in a PUCCH resource i is $N_{RE,i}$, a UE

【Equation 5】

$$N_{RE,i} \geq N\_p / Rmax / Qm$$

In this case, the UE may select a PUCCH resource corresponding to a minimum value $N_{RE,i,min}$ among $N_{RE,i}$ value(s) satisfying the above Equation 5.
To more easily know a relation between N_p and other parameters, the above Equation 5 may be modified to the following Equation 6.

【Equation 6】

$$N\_p \leq N_{RE_i} \times Rmax \times Qm$$

That is, in order to transmit all DCI on PUCCH resource, the UE may determine a PUCCH with a lowest index (or a minimum index) among PUCCH resources corresponding to the number of REs having a value equal to or greater than a size of a payload for all the UCI among values obtained by multiplying the maximum code rate Rmax and the modulation order Qm by the number of REs corresponding to the PUCCH resource, and transmit all the UCI on the determined PUCCH.

Here, the maximum code rate may be a configured value as described below or a previously defined value.

If the maximum code rate is the configured value, the configured maximum code rate may mean an index. In this case, the index may be mapped to a value of an actually applied maximum code rate.

In this case, in the same manner as the Case 1, the number of RBs that are used for the UE to actually transmit UCI may be determined by N_p and Rmax, and the value thus determined may be different from the number of RBs allocated through the PUCCH resource.

If the Part 2 CSI is variable-size, the UE may determine the PUCCH resource or the PUCCH resource set based on N_p as in the above method and may not inform explicitly or implicitly the gNB of N_p information.

In this case, the gNB may have to reserve excessive PUCCH resources taking account of the variable-size of the Part 2 CSI, or perform excessive BD for PUCCH resource and/or PUCCH resource set for several N_p possibilities.

This has a problem that the whole resource overhead and computational complexity and decoding time at the gNB are increased.

First, in the Case 1, due to uncertainty of N_p, the gNB assumes multiple PUCCH resource sets and has to attempt the decoding using a HARQ-ACK resource indicator of DCI.

In this case, even if the gNB uses the HARQ-ACK resource indicator via the DCI, the gNB assumes several RB sizes and has to attempt fixed-size part 1 UCI decoding since the N_p is still uncertain from the gNB perspective.

Assuming that there is a large difference between the number of RBs allocated at PUCCH resource and the number of RBs used for the actual UCI transmission, the number of times of BD at the gNB may excessively increase.

In the Case 2, due to uncertainty of N_p, the gNB assumes several N_p values for the multiple PUCCH resources configured via the higher layer signaling and has to perform the BD for the fixed-size part 1 UCI decoding.

The following methods are considered to solve or mitigate the above-mentioned problem.

(Method 1)

This is a method if multiple UCI is transmitted in a large-payload long PUCCH configured for HARQ-ACK. (i.e., if a HARQ-ACK resource is indicated through DCI)

A. PUCCH resource set determination method

(Method 1-A-1) this is a method of determining, by a UE, a PUCCH resource set based on fixed-size part 1 UCI (or part 1 CSI), or fixed-size part 1 UCI (or part 1 CSI) and Rmax.

(Method 1-A-2) this is a method of determining, by a UE, a PUCCH resource set based on fixed-size part 1 UCI (or part 1 CSI) and fixed-size 'reference' part 2 UCI (or 'reference' part 2 CSI), or fixed-size part 1 UCI (or part 1 CSI) and fixed-size 'reference' part 2 UCI (or 'reference' part 2 CSI) and Rmax.

In this case, the reference part 2 UCI (or reference part 2 CSI) refers to a value that may be set within the range of a minimum value (e.g., 0) and a maximum value of part 2 UCI (or part 2 CSI) by taking into consideration variable-size part 2 UCI (or part 2 CSI).

That is, the reference part 2 UCI (or reference part 2 CSI) is a reference value for determining a kind of PUCCH resource set, a PUCCH resource, or the number of RBs used for actual UCI transmission within a PUCCH resource.

In addition, the reference part 2 UCI (or reference part 2 CSI) value may be a value assuming rank= 1 or may be a maximum value or minimum value of part 2 UCI (or part 2 CSI).

Alternatively, the reference part 2 UCI (or reference part 2 CSI) value may be a value calculated based on a rank value (e.g., rank=1 or rank=5) at which part 2 UCI (or part 2 CSI) is a minimum or maximum with respect to all (or most of) cases.

Alternatively, the reference part 2 UCI (or reference part 2 CSI) value may be determined as a middle value or average value of values of part 2 UCI (or part 2 CSI) as a tradeoff of part 2 UCI (or part 2 CSI) transmission and unnecessary overhead.

Alternatively, the reference part 2 UCI (or reference part 2 CSI) value may be a fixed value described in the standard document or may be a value set through RRC signaling or a combination of RRC signaling and DCI.

Furthermore, the meaning based on the reference part 2 UCI (or reference part 2 CSI) includes both a case where a value set by taking into consideration part 2 UCI (or part 2 CSI) is linearly added to fixed-size part 1 UCI (or part 1 CSI) and a case where the value is multiplied by fixed-size part 1 UCI (or part 1 CSI) in a scaled form.

B. Method of determining the number of RBs used for actual UCI transmission within a PUCCH resource

(Method 1-B-1) this is a method of determining, by a UE, an RB in which actual UCI will be transmitted within a PUCCH resource based on fixed-size part 1 UCI (or part 1 CSI) and Rmax.

(Method 1-B-2) this is a method of determining, by a UE, an RB in which actual UCI will be transmitted within a PUCCH resource based on fixed-size part 1 UCI (or part 1 CSI) and fixed-size 'reference' part 2 UCI (or 'reference' part 2 CSI) and Rmax.

In this case, the reference part 2 UCI (or reference part 2 CSI) refers to a value that may be set within the range of a minimum value (e.g., 0) and maximum value of part 2 UCI (or part 2 CSI) by taking into consideration variable-size part 2 UCI (or part 2 CSI).

That is, the reference part 2 UCI (or reference part 2 CSI) is a reference value for determining a kind of PUCCH resource set, a PUCCH resource, or the number of RBs used for actual UCI transmission within a PUCCH resource.

In addition, the reference part 2 UCI (or reference part 2 CSI) value may be a value assuming rank=1 or may be a maximum value or minimum value of part 2 UCI (or part 2 CSI).

Alternatively, the reference part 2 UCI (or reference part 2 CSI) value may be a value calculated based on a rank value (e.g., rank=1 or rank=5) at which part 2 UCI (or part 2 CSI) is a minimum or maximum with respect to all (or most of) cases.

Alternatively, the reference part 2 UCI (or reference part 2 CSI) value may be determined as a middle value or average value of values of part 2 UCI (or part 2 CSI) as the tradeoff of part 2 UCI (or part 2 CSI) transmission and unnecessary overhead.

Furthermore, the reference part 2 UCI (or reference part 2 CSI) value may be a fixed value described in the standard document or may be a value set through RRC signaling or a combination of RRC signaling and DCI.

Furthermore, the meaning based on the reference part 2 UCI (or reference part 2 CSI) includes both a case where a value set by taking into consideration part 2 UCI (or part 2 CSI) is linearly added to fixed-size part 1 UCI (or part 1 CSI) and a case where the value is multiplied by fixed-size part 1 UCI (or part 1 CSI) in a scaled form.

(Method 1-B-3) this is a method of determining an RB in which actual UCI will be transmitted within a PUCCH resource based on a total number of bits, that is, the sum of maximum values of fixed-size part 1 UCI (or part 1 CSI) and variable-size part 2 UCI (or variable-size part 2 CSI), or a maximum value of a total UCI (part 1 + part 2) payload size and Rmax.

Furthermore, a gNB may perform BD based on the methods.

(Method 2)

This is a method for a case where multiple UCI is transmitted in a large-payload long PUCCH configured for a CSI report. (a case where a HARQ-ACK resource cannot be indicated through DCI)

A. PUCCH resource determination method

(Method 2-A-1) this is a method of determining, by a UE, a PUCCH resource based on fixed-size part 1 UCI (or part 1 CSI), or fixed-size part 1 UCI (or part 1 CSI) and Rmax.

(Method 2-A-2) this is a method of determining, by a UE, a PUCCH resource based on fixed-size part 1 UCI (or part 1 CSI) and fixed-size 'reference' part 2 UCI (or 'reference' part 2 CSI), or fixed-size part 1 UCI (or part 1 CSI) and fixed-size 'reference' part 2 UCI (or 'reference' part 2 CSI) and Rmax.

In this case, the reference part 2 UCI (or reference part 2 CSI) refers to a value that may be set within the range of a minimum value (e.g., 0) and maximum value of part 2 UCI (or part 2 CSI) by taking into consideration variable-size part 2 UCI (or part 2 CSI).

That is, the reference part 2 UCI (or reference part 2 CSI) is a reference value for determining a kind of PUCCH resource set, a PUCCH resource, or the number of RBs used for actual UCI transmission within a PUCCH resource.

Furthermore, the reference part 2 UCI (or reference part 2 CSI) value may be a value assuming rank=1 or may be a maximum value or minimum value of part 2 UCI (or part 2 CSI).

Alternatively, the reference part 2 UCI (or reference part 2 CSI) value may be a value calculated based on a rank value (e.g., rank=1 or rank=5) at which part 2 UCI (or part 2 CSI) is a minimum or maximum with respect to all (or most of) cases.

Alternatively, the reference part 2 UCI (or reference part 2 CSI) value may be determined as a middle value or average value of values of part 2 UCI (or part 2 CSI) as the tradeoff of part 2 UCI (or part 2 CSI) transmission and unnecessary overhead.

Furthermore, the reference part 2 UCI (or reference part 2 CSI) value may be a fixed value described in the standard document or may be a value set through RRC signaling or a combination of RRC signaling and DCI.

In this case, the meaning based on the reference part 2 UCI (or reference part 2 CSI) includes both a case where a value set by taking into consideration part 2 UCI (or part 2 CSI) is linearly added to fixed-size part 1 UCI (or part 1 CSI) and a case where the value is multiplied by fixed-size part 1 UCI (or part 1 CSI) in a scaled form.

B. Method of determining the number of RBs used for actual UCI transmission within a PUCCH resource

(Method 2-B-1) this is a method of determining, by a UE, an RB in which actual UCI will be transmitted within a PUCCH resource based on fixed-size part 1 UCI (or part 1 CSI) and Rmax.

(Method 2-B-2) this is a method of determining, by a UE, an RB in which actual UCI will be transmitted within a PUCCH resource based on fixed-size part 1 UCI (or part 1 CSI) and fixed-size 'reference' part 2 UCI (or 'reference' part 2 CSI) and Rmax.

In this case, the reference part 2 UCI (or reference part 2 CSI) refers to a value that may be set within the range of a minimum value (e.g., 0) and maximum value of part 2 UCI (or part 2 CSI) by taking into consideration variable-size part 2 UCI (or part 2 CSI).

That is, the reference part 2 UCI (or reference part 2 CSI) is a reference value for determining a kind of PUCCH resource set, a PUCCH resource, or the number of RBs used for actual UCI transmission within a PUCCH resource.

In this case, the reference part 2 UCI (or reference part 2 CSI) value may be a value assuming rank=1 or may be a maximum value or minimum value of part 2 UCI (or part 2 CSI).

Alternatively, the reference part 2 UCI (or reference part 2 CSI) value may be a value calculated based on a rank value (e.g., rank=1 or rank=5) at which part 2 UCI (or part 2 CSI) is a minimum or maximum with respect to all (or most of) cases.

Alternatively, the reference part 2 UCI (or reference part 2 CSI) value may be determined as a middle value or average value of values of part 2 UCI (or part 2 CSI) as the tradeoff of part 2 UCI (or part 2 CSI) transmission and unnecessary overhead.

Furthermore, the reference part 2 UCI (or reference part 2 CSI) value may be a fixed value described in the standard document or may be a value set through RRC signaling or a combination of RRC signaling and DCI.

In this case, the meaning based on the reference part 2 UCI (or reference part 2 CSI) includes both a case where a value set by taking into consideration part 2 UCI (or part 2 CSI) is linearly added to fixed-size part 1 UCI (or part 1 CSI) and a case where the value is multiplied by fixed-size part 1 UCI (or part 1 CSI) in a scaled form.

(Method 2-B-3) this determines an RB in which actual UCI will be transmitted within a PUCCH resource based on a total number of bits, that is, the sum of maximum values of fixed-size part 1 UCI (or part 1 CSI) and variable-size part 2 UCI (or variable-size part 2 CSI), or a maximum value of a total UCI (part 1 + part 2) payload size and Rmax.

Furthermore, a gNB may perform BD assuming the methods.

Meanwhile, in NR, a plurality of CSI reports may be configured for each UE.

In this case, the UE may be configured with a PUCCH resource for a CSI report by taking into consideration a mode (wideband vs. subband) of a corresponding CSI report, a payload size, etc. for each report.

The configured PUCCH resource for a single CSI report may be a PUCCH resource optimized for each CSI report.

In this case, in NR, in preparation to a case where a plurality of configured CSI reports is transmitted in one slot, one or a plurality of (J>=1, J is the number of PUCCH resources for a multiple CSI report that may be configured) PUCCH resources for a multiple CSI report may be separately configured.

Hereinafter, the following UE operations are proposed if a PUCCH resource for a single CSI report is configured.

(Operation 1)

A UE transmits UCI to a gNB as follows based on a total UCI payload size and the size of $N_{RE}$ using a configured PUCCH resource for a single CSI report without any change.

(Operation 1-A) this an operation of a UE when a total UCI payload size (HARQ-ACK (or HARQ-ACK and an SR) + part 1 CSI + part 2 CSI) is smaller than or equal to $N_{RE}$. (if HARQ-ACK (or HARQ-ACK and an SR) + part 1 CSI + part 2 CSI $\leq N_{RE}$)

　　　i) The UE transmits the total payload to the gNB using a PUCCH resource for a single CSI report without any change.

In this case, the gNB may distribute the HARQ-ACK (or HARQ-ACK and an SR) payload through scheduling so that the total payload size does not exceed $N_{RE}$. This is an operation of a UE when a total UCI payload size (HARQ-ACK (or HARQ-ACK and an SR) + part 1 CSI + part 2 CSI) exceeds $N_{RE}$. (if HARQ-ACK (or HARQ-ACK and an SR) + part 1 CSI + part 2 CSI $> N_{RE}$)

　　　i. A UE drops some of the part 2 CSI, and transmits the HARQ-ACK (or HARQ-ACK and an SR) and the part 1 CSI, and some of the part 2 CSI to a gNB using a PUCCH resource for a single CSI report.
　　　ii. A UE drops the entire part 2 CSI and transmits the HARQ-ACK (or HARQ-ACK and an SR) and the part 1 CSI to a gNB.

A UE drops all the part 1 CSI and the part 2 CSI and transmits only the HARQ-ACK (or HARQ-ACK and an SR) to a gNB.

(Operation 2)

A UE transmits UCI to a gNB using a PUCCH resource for a multiple CSI report.

(Operation 2-A) a UE may transmit some or all of the PUCCH simultaneous transmission of a periodic or semi-persistent CSI report and HARQ-ACK (or HARQ-ACK and an SR) of an SPS PDSCH to a gNB using a PUCCH resource for a multiple CSI report by handling it identically with the case of multiple CSI report on PUCCH.

Alternatively, the UE may select one of a plurality of PUCCH resource(s) for a multiple CSI report based on some or all of a periodic or semi-persistent CSI report and HARQ-ACK (or HARQ-ACK and an SR) of an SPS PDSCH, and may transmit the entire or some UCI to the gNB.

There are proposed the following UE operations for a case where one or a plurality of PUCCH resource has been configured for a multiple CSI report.

(Operation 3)

This is an operation when the number of PUCCH resources configured in a UE for a multiple CSI report is 1 (J=1).

Operation 3-A) The method of determining the number of RBs used for actual UCI transmission within a PUCCH resource of Case 2) (Method 2-B-1/2/3) may be applied to an RB determination within a PUCCH resource for a CSI report.

(Operation 4)

This is an operation when the number of PUCCH resources configured in a UE for a multiple CSI report is plural (J>1).

Operation 4-A) The PUCCH resource determination method of Case 2) (Method 2-A-1/2) may be applied to a PUCCH resource determination for a CSI report.

Operation 4-B) The method of determining the number of RBs used for actual UCI transmission within a PUCCH resource of Case 2) (Method 2-B-1/2/3) may be applied to an RB determination within a PUCCH resource for a CSI report.

Reference values may be differently set as follows with respect to Case 1 and Case 2, that is, the case of A/N resource transmission and the case of CSI resource transmission.

For example, a reference value of CSI part 2 may be differently set based on an expected HARQ-ACK payload bit.

In the case of (Case 1, the case of A/N resource transmission), a plurality of HARQ-ACK payload bits may be multiplexed with an A/N resource and transmitted.

Accordingly, a minimum value of 0 (part 1 only) or part 2 UCI (or part 2 CSI) or a value calculated based on a rank value at which part 2 UCI (or part 2 CSI) is a minimum may be set as a reference value as a reference part 2 UCI (or reference part 2 CSI) value.

However, in the case of (Case 2, the case of CSI resource transmission), for example, it is expected that HARQ-ACK payload bits chiefly transmitted in a CSI resource like the HARQ-ACK transmission of a semi-persistent scheduled PDSCH will not be many.

Accordingly, a maximum value of part 2 UCI (or part 2 CSI) or a value calculated based on a rank value at which part 2 UCI (or part 2 CSI) is a maximum may be set as a reference value as a reference part 2 UCI (or reference part 2 CSI) value.

In the methods, the "fixed-size part 1 UCI (or part 1 CSI) and the fixed-size 'reference' part 2 UCI (or 'reference' part 2 CSI)" may mean a "total sum of bits or total payload size of fixed-size part 1 UCI (or part 1 CSI) and fixed-size 'reference' part 2 UCI (or 'reference' part 2 CSI)".

In the methods, the meaning that a "PUCCH resource (set) or RB is determined based on UCI (or CSI) and Rmax" may mean, more specifically, that a "resource (set) or RB configured with a minimum RE number capable of transmitting the number of coded bits based on UCI (or CSI) and Rmax is determined".

In the methods, the part 1 UCI may include HARQ-ACK and/or an SR.

Furthermore, in the methods, the HARQ-ACK PUCCH resource set may be configured for each UCI payload size range.

Furthermore, if the plurality of configured CSI reports is transmitted in one slot, PUCCHs may temporally overlap or may be time-division-multiplexd (TDMed) (i.e., non-overlapped).

In this case, a plurality of PUCCHs configured for a single-CSI report may be TDMed (non-overlapped) within the same slot (or one slot) and transmitted.

In this case, as in the case where the PUCCHs temporally overlap, the plurality of PUCCHs may be multiplexed using a configured PUCCH for a multiple CSI report within the same slot and transmitted.

Furthermore, if some of the plurality of configured PUCCH for a single-CSI report within the same slot overlaps and some thereof is TDMed (non-overlapped), only overlap PUCCHs for a single-CSI report may be multiplexed using a PUCCH for a multiple CSI report and transmitted.

Furthermore, all overlapped or TDMed (non-overlapped) PUCCHs for a single-CSI report may be multiplexed using a PUCCH for a multiple CSI report and transmitted.

Furthermore, only overlapped PUCCHs for a single-CSI report may be multiplexed using a PUCCH for a multiple CSI report and transmitted.

In this case, if a selected PUCCH for multi-CSI reporting temporally overlaps a PUCCH for a single-CSI report that has not been initially overlapped, that is, that has been initially TDMed (non-overlapped), an overlapped PUCCH for a single-CSI report may be dropped or may be additionally multiplexed with a PUCCH for a multiple CSI report and transmitted.

Alternatively, in the above case, a PUCCH including a CSI report having the highest priority, among all single-CSI reports configured within the same slot, may be transmitted, and a PUCCH overlapping the corresponding PUCCH may be dropped.

For example, in the above case, if a CSI report transmitted through an overlapped PUCCH for a single-CSI report has the highest priority, a PUCCH for a multi-CSI report may be dropped, and a single-CSI report having the highest priority may be transmitted through a PUCCH for a single-CSI report.

Alternatively, on the contrary, if a PUCCH for a multi-CSI report includes a CSI report having the highest priority, a PUCCH for a multi-CSI report may be transmitted and a single-CSI report may be dropped.

Alternatively, in the above case, a single-CSI report having the highest priority may be transmitted through an originally configured PUCCH for a single-CSI report, and all overlapped PUCCH(s) for a single-CSI report may be dropped.

In this case, all TDMed (non-overlapped) PUCCHs for another single- or multi-CSI report may be dropped or may be TDMed and transmitted based on the UE capability.

The priority may have been determined by a CSI report type (semi-persistent or periodic), CSI report contents (whether RSRP is included), a serving cell index, a report ID, etc.

Meanwhile, if a plurality of PUCCHs for a multi-CSI report is configured, a UE may select one of a plurality of PUCCHs for a multi-CSI report based on the payload size of the multi-CSI report (total CSI or UCI payload bits multiplexed and transmitted through a PUCCH for a multi-CSI report).

In this case, the UE may select one of the PUCCHs for a multi-CSI report by taking into consideration the starting point and/or duration (start and length indicator (SLIV)) of an additionally configured PUCCH for a multi-CSI report.

For example, there may be a case where the capacities of PUCCHs for a multi-CSI report (a maximum CSI or total UCI payload bits that may be transmitted through a PUCCH for a multi-CSI report) are the same or different, but are the same or greater than a total payload size of a multi-CSI report or UCI information including a multi-CSI report in a corresponding slot.

In this case, a UE may preferentially select a PUCCH for a multi-CSI report, which does not overlap a different PUCCH(s) for a single-CSI report or does not overlap a PUCCH(s) in which different UCI is transmitted.

Alternatively, in the above case, a UE may preferentially select a PUCCH for a multi-CSI report, which is temporally foremost, in order to reduce latency.

Alternatively, a UE may preferentially select a PUCCH for a multi-CSI report, which is temporally located in the rearmost, in order to reduce uncertainty in terms of the processing timeline.

In the case of Case 2, if the number of PUCCH resources configured through higher layer signaling is Nr, a UE may determine a PUCCH resource using the following operation, for example.

That is, contents related to Equations 5 and 6 are described below more specifically.

A UE arranges Nr PUCCH resource in ascending powers based on the number of REs ($N_{RE}$) capable of PUCCH transmission in each PUCCH resource.

That is, the UE may set the index of a PUCCH resource, having the smallest number of REs, as the smallest value, and may set the index of a PUCCH resource, having the greatest number of REs, as the greatest value.

In this case, if the i-th of the PUCCH resources of $N_{RE}$ arranged in ascending powers is $N_{RE,i}$ (i=1,..., Nr),

## 【Equation 7】

$$N_{RE,i} \geq N\_p/Rmax/Qm$$

the UE may select a PUCCH resource corresponding to a minimum value $N_{RE,i,min}$ among $N_{RE,i}$ value(s) satisfying Equation 7.

Equation 7 indicates the same meaning as Equation 5 and Equation 6.

In this case, if $N_{RE}$ is the same for different PUCCH resources, the UE may select a PUCCH resource based on Rmax and/or a PUCCH format.

For example, after the UE preferentially attempts PUCCH resource selection based on Rmax, the UE may select a PUCCH resource based on the PUCCH format if $N_{RE}$ is the same up to Rmax.

Alternatively, if Rmax is allowed to be differently set with respect to the same PUCCH format, that is, if Rmax is not limited to be set for each PUCCH format, the UE may preferentially select a PUCCH resource based on a PUCCH format. If PUCCH formats are the same, the UE may select a PUCCH resource based on a comparison between Rmaxs.

The selection based on Rmax may mean that a PUCCH resource having the greatest Rmax is selected in terms of resource efficiency.

In this case, the UE may transmit more UCI payload bits to a base station using the same number of REs.

Alternatively, the selection based on Rmax may mean that a PUCCH resource having a small Rmax is selected in terms of performance (e.g., coverage).

In this case, an effect in that reception probability in a gNB can be improved or UCI coverage can be extended for transmission using UCI payload bits relatively smaller than the same number of REs can be obtained.

Furthermore, the selection based on the PUCCH format may be two types.

The first may be that a PUCCH format having a small number of symbols configuring a PUCCH is preferentially selected in terms of latency, etc. or a PUCCH format having a large number of symbols configuring a PUCCH is preferentially selected in terms of time diversity.

The second may be that a PUCCH format having a great multiplexing capacity is preferentially selected.

Alternatively, the two methods may be sequentially taken into consideration.

For example, after the first method is preferentially taken into considerate by giving priority to latency or time diversity, the second method may be taken into consideration if the first method remains intact.

Alternatively, after the second method is preferentially taken into consideration by giving priority to a multiplexing capacity, the first method may be taken into consideration if the second method remains intact.

With respect to the case of Case 2, a UE may arrange Nr PUCCH resources in ascending powers of a max UCI payload size (N_p_max) in which Rmax is taken into consideration, instead of arranging the Nr PUCCH resources in ascending powers of the number of REs $N_{RE}$ capable of PUCCH transmission of each PUCCH resource, and may select one of a plurality of PUCCH resources.

In this case, N_p_max may be $N_{RE} \cdot Rmax \cdot Qm$, for example.

In this case, assuming that an index indicating the sequence that the Nr PUCCH resources are arranged in ascending powers is j (j=1~Nr) and a max UCI payload size of a j-th PUCCH resource arranged in ascending powers is N_p_max,j (e.g., N_p_max,j = $N_{RE,j} \cdot Rmax,j \cdot Qm$), a UE may select a PUCCH resource corresponding to a minimum value N_p_max,j,min, among N_p_max,j value(s) satisfying $N\_p \leq N\_p\_max,j$.

In this case, if N_p_max is the same for different PUCCH resources, the UE may select a PUCCH resource based on Rmax and/or a PUCCH format.

For example, after the UE preferentially attempts PUCCH resource selection based on Rmax, the UE may select a PUCCH resource based on the PUCCH format if it is the same until Rmax.

Alternatively, if Rmax is allowed to be differently set for the same PUCCH format, that is, if Rmax is not limited to be set for each PUCCH format, the UE may preferentially select a PUCCH resource based on the PUCCH format and select a PUCCH resource based on a comparison between Rmaxs if the PUCCH format is the same.

Alternatively, with respect to a case where a PUCCH format is preferentially is taken into consideration, if Rmax is configured for each PUCCH format, Rmax will be the same if the PUCCH format is the same.

For this reason, a UE may select a PUCCH resource based on only a PUCCH format.

The selection based on Rmax may mean that a PUCCH resource having a great Rmax is selected in terms of resource efficiency.

In this case, more UCI payload bits can be transmitted using the same number of REs.

Alternatively, the selection based on Rmax may mean that a PUCCH resource having a small Rmax is selected in terms of performance (e.g., coverage).

In this case, an effect in that reception probability in a gNB can be improved or UCI coverage can be extended for transmission using UCI payload bits relatively smaller than the same number of REs can be obtained.

Furthermore, the selection based on the PUCCH format may be two.

The first may be that a PUCCH format having a small number of symbols configuring a PUCCH is preferentially selected in terms of latency, etc. or a PUCCH format having a large number of symbols configuring a PUCCH is preferentially selected in terms of time diversity.

Alternatively, the second may be that a PUCCH format having a large multiplexing capacity is preferentially selected.

Alternatively, the two methods may be sequentially taken into consideration.

For example, after the first method is preferentially taken into considerate by giving priority to latency or time diversity, the second method may be taken into consideration if the first method remains intact.

Alternatively, after the second method is preferentially taken into consideration by giving priority to a multiplexing capacity, the first method may be taken into consideration if the second method remains intact.

With respect to the two cases (i.e., if $N_{RE}$ or N_p_max is the same in the state in which Nr PUCCH resources for a multi-CSI report have been configured), a UE may take into consideration a sequence on an RRC configuration list configuring the Nr PUCCH resources as a criterion for selecting a PUCCH resource, in addition to Rmax and/or a PUCCH format.

For example, if a PUCCH resource 1 and PUCCH resource 2 for a multi-CSI report have been defined in order of the PUCCH resource 1 and PUCCH resource 2 on the RRC configuration list, a UE may preferentially select the PUCCH resource 1 if $N_{RE}$ or N_p_max is the same.

Alternatively, the UE may determine priority based on a combination of the Rmax and/or the PUCCH format.

For example, a UE may select a PUCCH resource by preferentially taking into consideration Rmax and/or a PUCCH format. If the Rmax and/or the PUCCH format is the same, the UE may finally select a PUCCH resource by taking into consideration the sequence on the RRC configuration list.

Alternatively, a PUCCH resource may be selected with reference to only an RRC configured or dynamically indicated priority indicator (e.g., URLLC flag) or a combination with the conditions (Rmax and/or the PUCCH format and/or the sequence on the RRC configuration list) may be used as a criterion for selecting a PUCCH resource.

For example, a UE may preferentially select a PUCCH resource having a small Rmax or select a PUCCH format having small PUCCH duration when a URLLC flag is '1'.

Furthermore, a UE may determine a PUCCH resource with reference to a priority indicator in a specific step on priority order that determines a PUCCH resource.

Alternatively, if Nr PUCCH resources for a multi-CSI report have been configured in a UE, a standard document may specify that it is expected that $N_{RE}$ or N_p_max will not be the same between different PUCCH resources so that the case does not occur, and thus a gNB may obligatorily set a different $N_{RE}$ or N_p_max value for a different PUCCH resource.

Furthermore, in addition the methods, in multiple UCI transmission using a long PUCCH, a UE behavior for a case where a CSI report generated based on a configured long PUCCH for a CSI report cannot be applied to a long PUCCH format indicated through the HARQ-ACK resource indicator, etc. of a DL DCI field at corresponding CSI report timing without any change needs to be regulated.

For example, a CSI report may be different in a configuration or CSI generation method as follows with respect to a wideband mode and a subband mode.

(In the case of wideband mode)

A CSI reporting resource may be configured for both a large-payload short PUCCH and a large-payload long PUCCH, and applies single or joint encoding to generated CSI bits (produced in a fixed size by zero-padding according to circumstances).

(In the case of subband mode)

A CSI reporting resource may be configured for only a large-payload long PUCCH, and separate coding is applied to part 1 CSI (fixed size) and part 2 CSI (variable size), that is, generated two CSI parts.

In the state in which a large-payload long PUCCH format has been configured for the above-described subband mode CSI reporting, a UE behavior is described in Method 3 with respect to a case where transmission through a large-payload short PUCCH not supporting subband mode CSI reporting through DL DCI at CSI report timing has been indicated.

(Method 3)

This is a method for a case where transmission has been indicated to be performed in a large-payload short PUCCH through DL DCI at CSI report timing in the state in which a large-payload long PUCCH format has been configured for subband mode CSI reporting.

The case may be a case where a large-payload long PUCCH is not present within a PUCCH resource set configured for HARQ-ACK or a case where a large-payload long PUCCH is not present in PUCCH resources indicated by a PUCCH resource indicator (or A/N resource indicator (ARI)) of DL DCI within a PUCCH resource set configured for HARQ-ACK.

Furthermore, if a PUCCH resource indicator (or A/N resource indicator (ARI)) of DL DCI is present in such a condition, a UE may check whether a large-payload long PUCCH is present in PUCCH resources indicated by the PUCCH resource indicator (or A/N resource indicator (ARI)) among PUCCH resources present within previously configured PUCCH resources for HARQ-ACK or PUCCH resources present within PUCCH resource sets for HARQ-ACK, and may perform the following method (operation) if large-payload long PUCCH is not present.

(Method 3-1) A UE drops part 2 CSI (in the state in which a subband mode is maintained), and transmits only HARQ-ACK (or HARQ-ACK and an SR) and part 1 CSI in a large-payload short PUCCH indicated through DCI (by single or joint encoding).

Method 3-1 is a method advantageous in terms of a processing time or complexity because some of a generated CSI report is simply dropped based on a long PUCCH configured for a CSI report.

However, if the payload size of part 1 CSI generated based on a subband mode is greater than a wideband CSI payload size, the allocation of an additional RE and/or RB and/or PUCCH symbol, etc. may be necessary and there is a danger that the transmission capacity of a large-payload short PUCCH indicated through DCI may be exceeded.

In this case, if the transmission capacity is exceeded, a UE may transmit only some according to a priority rule by applying a part 1 CSI dropping rule or drop the entire part 1 CSI and may transmit only HARQ-ACK (or HARQ-ACK and an SR) in a large-payload short PUCCH indicated through DCI.

In this case, if the payload of the HARQ-ACK (or HARQ-ACK and an SR) is small, the UE may fall it back to a small-payload short PUCCH.

In this case, in the above case, the UE may determine a PUCCH resource set based on UCI payload to be actually transmitted other than the dropped part.

For example, the UE may determine a PUCCH resource set based on payload configured with only HARQ-ACK (or HARQ-ACK and an SR) and part 1 CSI other than part 2 CSI. In this case, the meaning based on the payload may mean that a PUCCH resource set is determined based on the number of coded bits generated by encoding.

In the above case, the UE may determine the number of RBs used for actual UCI transmission within a PUCCH resource based on UCI payload to be actually transmitted other than a dropped part.

For example, the UE may determine the number of RBs used for actual UCI transmission within a PUCCH resource based on payload configured with only HARQ-ACK (or HARQ-ACK and an SR) and part 1 CSI other than part 2 CSI.

In this case, the meaning based on the payload may mean that the number of RBs is determined based on the number of coded bits generated by encoding.

(Method 3-2) a UE transmits HARQ-ACK (or HARQ-ACK and an SR) and wideband mode CSI (dynamically switching to a wideband mode) in a large-payload short PUCCH indicated through DCI by single or joint encoding.

Method 3-2 does not require the allocation of an additional RE and/or RB and/or PUCCH symbol, etc. or does not have a danger that a short PUCCH capacity is exceeded in Method 3-1 because a wideband mode or subband CSI needs to be generated based on a PUCCH format dynamically indicated through DCI, but has a large processing time or complexity, etc. in a CSI report generation process.

In particular, if the processing time is taken into consideration, Method 3-2 may include the following operation.

In the case (i.e., when a UE is configured with subband mode CSI and a corresponding large-payload long PUCCH format for CSI reporting), the UE may generate both subband mode CSI and wideband mode CSI, may transmit the wideband mode CSI when the large-payload short PUCCH is indicated through DCI, and may transmit the subband mode CSI if not.

Furthermore, in the above case, the UE may determine a PUCCH resource set, assuming the wideband mode CSI.

In this case, the meaning that the wideband mode CSI is assumed may include that a PUCCH resource set is determined based on the number of coded bits generated by joint encoding the wideband mode CSI and HARQ-ACK (or HARQ-ACK and an SR).

Furthermore, in the above case, the UE may determine the number of RBs used for actual UCI transmission within a PUCCH resource based on the wideband mode CSI.

In this case, the meaning that the wideband mode CSI is assumed may include that the number of RBs used for actual UCI transmission within a PUCCH resource is determined based on the number of coded bits generated by joint encoding the wideband mode CSI and HARQ-ACK (or HARQ-ACK and an SR).

(Method 3-3) a UE drops all of pieces of CSI and transmits only HARQ-ACK (or HARQ-ACK and an SR) through a large-payload short PUCCH indicated through DCI.

In this case, if the payload of the HARQ-ACK (or HARQ-ACK and an SR) is small, the UE may fall it back to a small-payload short PUCCH.

In this case, in the above case, the UE may determine a PUCCH resource set, assuming HARQ-ACK (or HARQ-ACK and an SR) left after dropping the CSI.

In this case, the meaning that HARQ-ACK (or HARQ-ACK and an SR) is assumed after the CSI is dropped may include that a PUCCH resource set is determined based on the number of coded bits generated by encoding using HARQ-ACK (or HARQ-ACK and an SR) left after the CSI is dropped.

In this case, in the above case, the UE may determine the number of RBs used for actual UCI transmission within a PUCCH resource based on the HARQ-ACK (or HARQ-ACK and an SR) left after the CSI is dropped.

In this case, the meaning based on the HARQ-ACK (or HARQ-ACK and an SR) left after the CSI is dropped may include that the number of RBs used for actual UCI transmission within a PUCCH resource is determined based on the number of coded bits generated by encoding using only the HARQ-ACK (or HARQ-ACK and an SR) left after the CSI is dropped.

(Method 3-4) a UE separately encodes {HARQ-ACK (or HARQ-ACK and an SR) + part 1 CSI} and part 2 CSI (a PUCCH resource has been indicated through DCI, but only the case is excluded) and transmits them in a large-payload long PUCCH configured for a CSI report.

In the above case, a PUCCH resource determination for a CSI report and an RB determination within a PUCCH resource may follow the PUCCH resource determination method (Method 2-A-1/2) of Case 2 and the method of determining the number of RBs used for actual UCI transmission within a PUCCH resource (Method 2-B-1/2/3).

Furthermore, in the methods, to determine a PUCCH resource set based on payload configured with only HARQ-ACK (or HARQ-ACK and an SR) and part 1 CSI other than part 2 CSI or the number of coded bits generated by encoding may mean that 0 (part 1 only) is applied as a reference part 2 UCI (or reference part 2 CSI) value.

In this case, there may be a case where a UE receives indication that transmission must be performed in a small-payload PUCCH not supporting wideband or subband mode CSI reporting through a PUCCH resource indicator (or A/N resource indicator (ARI)) of DL DCI at CSI report timing in the state in which a large-payload PUCCH format has been configured for wideband or subband mode CSI reporting or a case where a UE is configured with only one PUCCH resource set supporting only a small-payload PUCCH (e.g., up to 2 UCI bits) has been configured for HARQ-ACK/SR transmission.

In this case, the UE may drop all of pieces of CSI (in the case of the subband mode, CSI part 2 and CSI part 2), and may transmit only HARQ-ACK/SR in a PUCCH format indicated by a PUCCH resource indicator (or A/N resource indicator (ARI)) of DL DCI.

In this case, the method has an advantage in that latency of HARQ-ACK/SR can be consistently maintained as intended by a gNB regardless of a CSI report and collision.

Alternatively, a UE may transmit an HARQ-ACK/SR and CSI (in the case of the wideband mode) or an HARQ-ACK/SR and CSI part 1, and CSI part 2 (in the case of the subband mode) in a large-payload PUCCH format configured for CSI reporting by joint encoding the HARQ-ACK/SR and CSI (in the case of the wideband mode) or the HARQ-ACK/SR and the CSI part 1 (in the case of the subband mode).

In the above case, if a payload size (including CRC bits) including the HARQ-ACK/SR and CSI (or CSI part 1 and CSI part 2) exceeds a max UCI payload size (N_p_max) (or capacity) in which Rmax of a configured PUCCH resource for a CSI report, the UE may drop CSI (or CSI part 1 and CSI part 2) and transmit only the HARQ-ACK/SR according to a PUCCH format indicated by a PUCCH resource indicator (or A/N resource indicator (ARI)) of DL DCI.

Furthermore, in order to prevent a case where Rmax is exceeded, the UE may determine the number of RBs of a large-payload PUCCH format in which HARQ-ACK/SR and CSI are transmitted, assuming maximum HARQ-ACK bits (e.g., 2 bits) that may be transmitted if only one PUCCH resource set has been configured for HARQ-ACK/SR transmission as described above.

If a UE does not receive DL DCI, the number of HARQ-ACK bits (e.g., 0, 1 or 2 HARQ-ACK bits) generated by the UE and the number of HARQ-ACK bits expected by a gNB may be different.

In this case, the gNB may perform blind decoding assuming a HARQ-ACK bit (e.g., 0, 1 or 2 bits) capable of transmission by the UE with respect to a large-payload PUCCH format configured for CSI reporting.

In this case, in order to reduce a burden of blind decoding by the gNB, as described above, if one PUCCH resource set has been configured for HARQ-ACK/SR transmission, the UE may determine the number of RBs of a large-payload PUCCH format configured for CSI reporting, assuming a maximum of transmittable HARQ-ACK bits (e.g., 2 bits), may always generate HARQ-ACK 2 bits, and may perform transmission.

In the above case, if actual transmission is not necessary (i.e., if it is not indicated by DL DCI), NACK may be transmitted.

For example, if 1-bit HARQ-ACK transmission is indicated by DL DCI, the first bit of HARQ-ACK 2 bits actually generated by a UE and transmitted by joint-encoding it with CSI (in the case of the wideband mode), or CSI part 1 (in the case of the subband mode) is 1-bit HARQ-ACK information indicated by the DL DCI, and the second bit of the HARQ-ACK 2 bits may be transmitted as NACK.

In the methods, the large-payload long PUCCH may include a PUCCH format classification method in its introduction part.

In this case, the PUCCH format classification method may he performed based on a large-payload long PUCCH and a medium-payload long PUCCH (with or without multiplexing capacity), for example.

The above-described embodiments or methods may be separately performed and may be performed through a combination of one or more of the embodiments or methods to implement a method proposed in this specification.

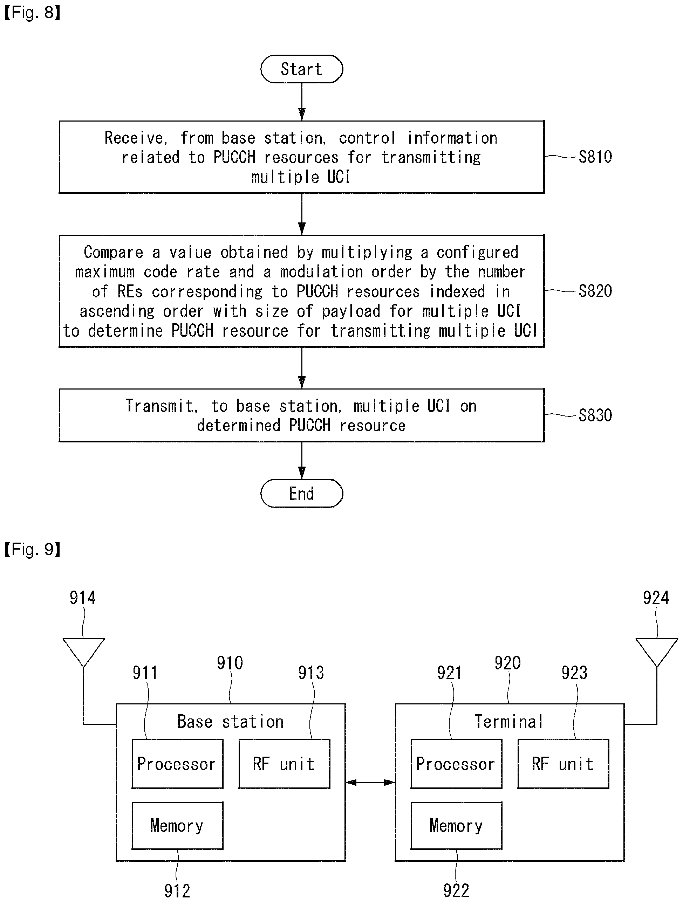

FIG. 8 is a flowchart showing an operation method of a terminal performing a method proposed in this specification.

That is, FIG. 8 shows an operation method of a terminal transmitting a plurality of uplink control information (UCI) on a physical uplink control channel (PUCCH) in a wireless communication system.

First, the terminal receives PUCCH resources for a channel state information (CSI) report from a base station (S810).

Next, if the PUCCH resources are present in one slot and the PUCCH resources overlap, the terminal multiplexes a plurality of UCI with a specific PUCCH resource of the PUCCH resources (S820).

Next, the terminal transmits the plurality of UCI to the base station through the specific PUCCH resource (S830).

In this case, the PUCCH resources for the CSI report may be for at least one of a single-CSI report or a multi-CSI report.

In this case, step S820 may multiplex the plurality of UCI, configured in the overlapped resource, with the PUCCH resources used for the multi-CSI report if the PUCCH resources are configured in one slot and some of the PUCCH resources for the single-CSI report overlap.

In this case, step S820 may multiplex the plurality of UCI, configured in all the PUCCH resources for the single-CSI report, with the PUCCH resources used for the multi-CSI report if some of the PUCCH resources for the use of the single-CSI report overlap.

In this case, the specific PUCCH resource may be the remaining PUCCH resource after an overlapped part is dropped if the PUCCH resources are present in one slot and the PUCCH resources overlap.

In this case, the specific PUCCH resource may be a PUCCH resource including a CSI report having high priority based on predetermined priority if the PUCCH resources are present in one slot and the PUCCH resources overlap.

In this case, the predetermined priority may be determined based on any one of a CSI report type, CSI report contents, a serving cell index and/or a report ID.

Contents in which the transmission of a plurality of uplink control information (UCI) on a physical uplink control channel (PUCCH) is implemented in a terminal device in a wireless communication system proposed in this specification are described with reference to FIGS. 8 to 10.

The terminal transmitting a plurality of uplink control information (UCI) on system a physical uplink control channel (PUCCH) in a wireless communication may include a radio frequency (RF) module for transmitting and receiving radio signals and a processor functionally connected to the RF module.

First, the processor of the terminal controls the RF module to receive PUCCH resources for a channel state information (CSI) report from a base station.

Furthermore, if the PUCCH resources are configured in one slot and the PUCCH resources overlap, the processor multiplexes the plurality of UCI with a specific PUCCH resource of the PUCCH resources.

Furthermore, the processor controls the RF module to transmit the plurality of UCI to the base station through the specific PUCCH resource.

In this case, the PUCCH resources for the CSI report may be for at least one of a single-CSI report or a multi-CSI report.

In this case, the processor may multiplex the plurality of UCI, configured in the overlapped resource, with the PUCCH resources used for the multi-CSI report if the PUCCH resources are configured in one slot and some of the PUCCH resources for the single-CSI report overlap.

In this case, the processor may multiplex the plurality of UCI, configured in all the PUCCH resources for the single-CSI report, with the PUCCH resources used for the multi-CSI report if some of the PUCCH resources for the use of the single-CSI report overlap.

In this case, the specific PUCCH resource may be the remaining PUCCH resource after an overlapped part is dropped if the PUCCH resources are present in one slot and the PUCCH resources overlap.

In this case, the specific PUCCH resource may be a PUCCH resource including a CSI report having high priority based on predetermined priority if the PUCCH resources are present in one slot and the PUCCH resources overlap.

In this case, the predetermined priority may be determined based on any one of a CSI report type, CSI report contents, a serving cell index and/or a report ID.

In addition, an operation of a base station performing the methods proposed in this specification is described.

First, the base station may transmit PUCCH resources for a channel state information (CSI) report to a terminal.

Next, the base station receives a plurality of UCI, transmitted through a specific PUCCH resource of the PUCCH resources, from the terminal.

In this case, the PUCCH resources for the CSI report may be for at least one of a single-CSI report or a multi-CSI report.

In this case, the specific PUCCH resource may be the remaining PUCCH resource after an overlapped part is dropped if the PUCCH resources are present in one slot and the PUCCH resources overlap.

In this case, the specific PUCCH resource may be a PUCCH resource including a CSI report having high priority based on predetermined priority if the PUCCH resources are present in one slot and the PUCCH resources overlap.

In this case, the predetermined priority may be determined based on any one of a CSI report type, CSI report contents, a serving cell index and/or a report ID.

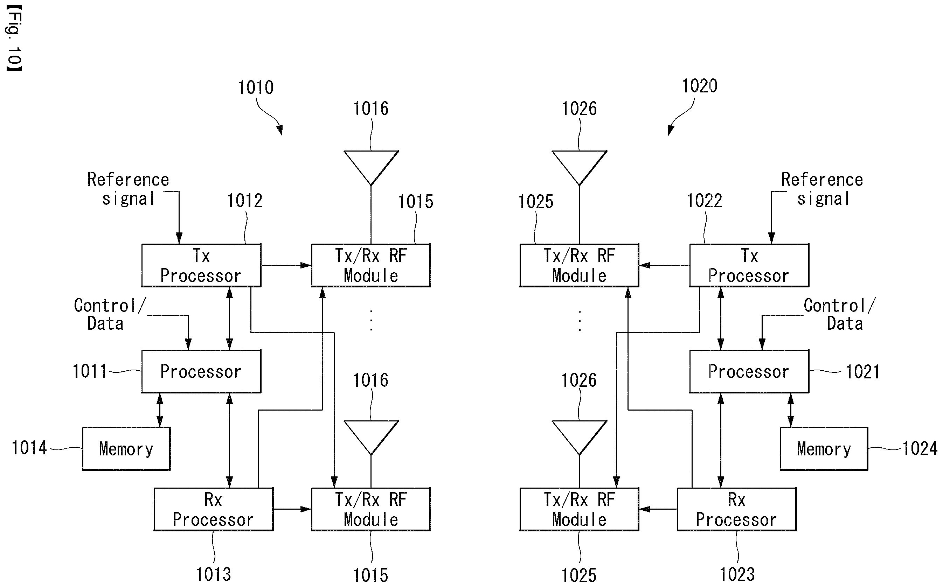

Contents in which the reception of a plurality of uplink control information (UCI) on a physical uplink control channel (PUCCH) is implemented in a base station device in a wireless communication system in this specification are described with reference to FIGS. 9 and 10.

The base station receiving a plurality of uplink control information (UCI) on a physical uplink control channel (PUCCH) in a wireless communication system may include a radio frequency (RF) module for transmitting and receiving radio signals; and a processor functionally connected to the RF module.

First, the processor of the base station controls the RF module to transmit PUCCH resources for a channel state information (CSI) report to a terminal.

Furthermore, the processor controls the RF module to receive the plurality of UCI through the specific PUCCH resource from the terminal.

In this case, the specific PUCCH resource may be the remaining PUCCH resource after an overlapped part is dropped if the PUCCH resources are present in one slot and the PUCCH resources overlap.

In this case, the specific PUCCH resource may be a PUCCH resource including a CSI report having high priority based on predetermined priority if the PUCCH resources are present in one slot and the PUCCH resources overlap.

In this case, the predetermined priority may be determined based on any one of a CSI report type, CSI report contents, a serving cell index and/or a report ID.

The above-described methods may be independently performed or the method may be coupled or combined or performed in various ways.

Overview of device to which the present invention is applied

FIG. 9 illustrates a block diagram of a wireless communication device to which methods proposed in this specification may be applied.

Referring to FIG. 9, a wireless communication system includes a base station 910 and a plurality of terminals 920 disposed within the base station area.

The base station and the terminal may be represented as respective radio devices.

The base station 910 includes a processor 911, memory 912 and a radio frequency (RF) module 913. The processor 911 implements the functions, processes and/or methods proposed in FIGS. 1 to 8. The layers of a radio interface protocol may be implemented by the processor. The memory is connected to the processor and stores a variety of pieces of information for driving the processor. The RF module is connected to the processor and transmits and/or receives radio signals.

The terminal includes a processor 921, memory 922 and an RF module 923.

The processor implements the functions, processes and/or methods proposed in FIGS. 1 to 8. The layers of a radio interface protocol may be implemented by the processor. The memory is connected to the processor and stores a variety of pieces of information for driving the processor. The RF module 923 is connected to the processor and transmits and/or receives radio signals.

The memory 912, 922 may be positioned inside or outside the processor 911, 921 and may be connected to the processor by various well-known means.

Furthermore, the base station and/or the terminal may have a single antenna or multiple antennas.

FIG. 10 illustrates another block diagram of a wireless communication device to which methods proposed in this specification may be applied.

Referring to FIG. 10, the wireless communication system includes a base station 1010 and multiple terminals 1020 disposed within the base station region. The base station may be represented as a transmission device, and the terminal may be represented as a reception device, and vice versa. The base station and the terminal include processors 1011 and 1021, memory 1014 and 1024, one or more Tx/Rx radio frequency (RF) modules 1015 and 1025, Tx processors 1012 and 1022, Rx processors 1013 and 1023, and antennas 1016 and 1026, respectively. The processor implements the above-described functions, processes and/or methods. More specifically, in DL (communication from the base station to the terminal), a higher layer packet from a core network is provided to the processor 1011. The processor implements the function of the L2 layer. In DL, the processor provides the terminal 1020 with multiplexing between a logical channel and a transport channel and radio resource allocation, and is responsible for signaling toward the terminal. The transmission (TX) processor 1012 implements various signal processing functions for the L1 layer (i.e., physical layer). The signal processing function facilitates forward error correction (FEC) in the terminal, and includes coding and interleaving. A coded and modulated symbol is split into parallel streams. Each stream is mapped to an OFDM subcarrier and multiplexed with a reference signal (RS) in the time and/or frequency domain. The streams are combined using inverse fast Fourier transform (IFFT) to generate a physical channel that carries a time domain OFDMA symbol stream. The OFDM stream is spatially precoded in order to generate multiple space streams. Each space stream may be provided to a different antenna 1016 through an individual Tx/Rx module (or transmitter and receiver 1015). Each Tx/Rx module may modulate an RF carrier into each space stream for transmission. In the terminal, each Tx/Rx module (or transmitter and receiver 1025) receives a signal through each antenna 1026 of each Tx/Rx module. Each Tx/Rx module restores information modulated in an RF carrier and provides it to the RX processor 1023. The RX processor implements various signal processing functions of the layer 1. The RX processor may perform space processing on information in order to restore a given space stream toward the terminal. If multiple space streams are directed toward the terminal, they may be combined into a single OFDMA symbol stream by multiple RX processors. The RX processor converts the OFDMA symbol stream from the time domain to the frequency domain using fast Fourier transform (FFT). The frequency domain signal includes an individual OFDMA symbol stream for each subcarrier of an OFDM signal. Symbols on each subcarrier and a reference signal are restored and demodulated by determining signal deployment points having the best possibility, which have been transmitted by the base station. Such soft decisions may be based on channel estimation values. The soft decisions are decoded and deinterleaved in order to restore data and a control signal originally transmitted by the base station on a physical channel. A corresponding data and control signal are provided to the processor 1021.

UL (communication from the terminal to the base station) is processed by the base station 1010 in a manner similar to that described in relation to the receiver function in the terminal 1020. Each Tx/Rx module 1025 receives a signal through each antenna 1026. Each Tx/Rx module provides an RF carrier and information to the RX processor 1023. The processor 1021 may be related to the memory 1024 storing a program code and data. The memory may be referred to as a computer-readable medium.

The embodiments described above are implemented by combinations of components and features of the present invention in predetermined forms. Each component or feature should be considered selectively unless specified separately. Each component or feature may be carried out without being combined with another component or feature. Moreover, some components and/or features are combined with each other and can implement embodiments of the present invention. The order of operations described in embodiments of the present invention may be changed. Some components or features of one embodiment may be included in another embodiment, or may be replaced by corresponding components or features of another embodiment. It will be apparent that some claims referring to specific claims may be combined with another claims referring to the other claims other than the specific claims to constitute the embodiment or add new claims by means of amendment after the application is filed.

Embodiments of the present invention can be implemented by various means, for example, hardware, firmware, software, or combinations thereof. When embodiments are implemented by hardware, one embodiment of the present invention can be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and the like.

In the case of an implementation by firmware or software, the embodiment of the present invention may be implemented in the form of a module, procedure or function for performing the aforementioned functions or operations. Software code may be stored in the memory and driven by the processor. The memory may be located inside or outside the processor and may exchange data with the processor through a variety of known means.

It is evident to those skilled in the art that the present invention may be materialized in other specific forms without departing from the essential characteristics of the present invention. Accordingly, the detailed description should not be construed as being limitative, but should be construed as being illustrative from all aspects. The scope of the present invention should be determined by reasonable analysis of the attached claims, and all changes within the equivalent range of the present invention are included in the scope of the present invention.

[Industrial Applicability]

Although the present invention has been described focusing on examples applying to the 3GPP LTE/LTE-A/NR system, it can be applied to various wireless communication systems other than the 3GPP LTE/LTE-A/NR system.

**Claims**

1. A method of transmitting a plurality of uplink control information (UCI) on a physical uplink control channel (PUCCH) in a wireless communication system, the method performed by a terminal comprising:

   receiving, from a base station, PUCCH resources for a channel state information (CSI) report;
   multiplexing the plurality of UCI with a specific PUCCH resource of the PUCCH resources, if the PUCCH resources are configured in one slot and the PUCCH resources overlap; and
   transmitting, to the base station, the plurality of UCI through the specific PUCCH resource.

2. The method of claim 1,
   wherein the PUCCH resources for the CSI report are for at least one of a single-CSI report and/or a multi-CSI report.

3. The method of claim 2,
   wherein the step of multiplexing the plurality of UCI,
   comprises multiplexing the plurality of UCI, configured in the overlapped resource, with a PUCCH resource used for the multi-CSI report, if the PUCCH resources are configured in one slot and some of the PUCCH resources for the single-CSI report overlap.

4. The method of claim 2,
   wherein the step of multiplexing the plurality of UCI,
   comprises multiplexing the plurality of UCI, configured in all PUCCH resources for the single-CSI report, with a PUCCH resource for the multi-CSI report, if some of the PUCCH resources used for the single-CSI report overlap.

5. The method of claim 1,
   wherein the specific PUCCH resource is a remaining PUCCH resource by dropping an overlapped part, if the PUCCH resources are present in one slot and the PUCCH resources overlap.

6. The method of claim 1,
   wherein the specific PUCCH resource is a PUCCH resource comprising a CSI report having high priority based on predetermined priority, if the PUCCH resources are present in one slot and the PUCCH resources overlap.

7. The method of claim 6,
   wherein the predetermined priority is determined based on at least one of a CSI report type, CSI report contents, a serving cell index, and/or a report ID.

8. A terminal transmitting a plurality of uplink control information (UCI) on a physical uplink control channel (PUCCH) in a wireless communication system, the terminal comprising:

   a radio frequency (RF) module configured to transmit and receive radio signals; and
   a processor functionally connected to the RF module,
   wherein the processor is configured to:

      receive, from a base station, PUCCH resources for a channel state information (CSI) report;
      multiplex the plurality of UCI with a specific PUCCH resource of the PUCCH resources, if the PUCCH resources are configured in one slot and the PUCCH resources overlap; and

transmit, to the base station, the plurality of UCI through the specific PUCCH resource.

9. The terminal of claim 8,
   wherein the PUCCH resources for the CSI report are for at least one of a single-CSI report and/or a multi-CSI report.

10. The terminal of claim 9,
    wherein the processor is configured to:
    multiplex the plurality of UCI, configured in the overlapped resource, with a PUCCH resource used for the multi-CSI report, if the PUCCH resources are configured in one slot and some of the PUCCH resources for the single-CSI report overlap.

11. The terminal of claim 9,
    wherein the processor is configured to:
    multiplex the plurality of UCI, configured in all PUCCH resources for the single-CSI report, with a PUCCH resource for the multi-CSI report, if some of the PUCCH resources used for the single-CSI report overlap.

12. The terminal of claim 8,
    wherein the specific PUCCH resource is a remaining PUCCH resource by dropping an overlapped part, if the PUCCH resources are present in one slot and the PUCCH resources overlap.

13. The terminal of claim 8,
    wherein the specific PUCCH resource is a PUCCH resource comprising a CSI report having high priority based on predetermined priority, if the PUCCH resources are present in one slot and the PUCCH resources overlap.

14. The terminal of claim 13,
    wherein the predetermined priority is determined based on at least one of a CSI report type, CSI report contents, a serving cell index, and/or a report ID.

【Fig. 1】

【Fig. 2】

【Fig. 3】

One subframe

$14 \cdot 2^{\mu}$ OFDM symbols

$k = N_{RB}^{\mu} N_{SC}^{RB} - 1$

$N_{RB}^{\mu} N_{SC}^{RB} - 1$ Subcarriers

$N_{SC}^{RB}$ Subcarriers

Resource Block

Resource Element
- (k, l̄) in resource grid
- (k, l) in resource block

$k = 0$

$l = 0$

$l = 14 \cdot 2^{\mu} - 1$

【Fig. 4】

Antenna port A  
Antenna port B } Numerology X

Antenna port A  
Antenna port B } Numerology Y

【Fig. 5】

530

DL only or UL only

Frequency

RB index

5
4
3
2
1
0

Symbol index
0  1  2  3  4  5  6  7  8  9  10  11  12  13

One TTI

510 — DL Control channel

520 — UL Control channel

[Fig. 6]

20MHz

DL Component
carrier

PDCCH

Subframe

PDSCH

UL Component
carrier

Subframe  PUSCH

20MHz

(a)Single CC

60MHz

20MHz | 20MHz | 20MHz

DL Component | DL Component | DL Component
carrier A | carrier B | carrier C

PDCCH

Subframe

PDSCH

UL Component | UL Component | UL Component
carrier A | carrier B | carrier C

Subframe  PUSCH

20MHz | 20MHz | 20MHz

60MHz

(b)Multiple CC

EP 3 687 098 A1

【Fig. 7】

(a)

(b)

(c)

(d)

F1    F2

(e)

【Fig. 8】

【Fig. 9】

【Fig. 10】

## INTERNATIONAL SEARCH REPORT

| International application No. |
|---|
| PCT/KR2019/000924 |

**A.    CLASSIFICATION OF SUBJECT MATTER**

*H04L 5/00(2006.01)i, H04W 24/10(2009.01)i*

According to International Patent Classification (IPC) or to both national classification and IPC

**B.    FIELDS SEARCHED**

Minimum documentation searched (classification system followed by classification symbols)
H04L 5/00; H04L 1/00; H04L 1/18; H04W 24/10

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: PUCCH, UCI, CSI report, slot, overlapping, multiplexing, single-CSI report, multi-CSI report, drop, priority, kind, content, serving cell index, report ID

**C.    DOCUMENTS CONSIDERED TO BE RELEVANT**

| Category* | Citation of document, with indication, where appropriate, of the relevant passages | Relevant to claim No. |
|---|---|---|
| Y | NOKIA et al. Remaining details for CSI reporting on PUCCH. R1-1800744. 3GPP TSG RAN WG1 Meeting AH 1801. Vancouver. Canada. 12 January 2018<br>See sections 2.1-2.4. | 1-14 |
| Y | VIVO. Remaining issues on UCI multiplexing. R1-1800202. 3GPP TSG RAN WG1 NR Meeting AH 1801. Canada. Vancouver. 13 January 2018<br>See section 2. | 1-14 |
| Y | VIVO. Remaining issues on UCI multiplexing. R1-1800995. 3GPP TSG RAN WG1 NR Meeting AH 1801. Canada. Vancouver. 17 January 2018<br>See section 2. | 5,12 |
| A | WO 2016-163855 A1 (SAMSUNG ELECTRONICS CO., LTD.) 13 October 2016<br>See paragraphs [116]-[133]; and figures 2-5. | 1-14 |
| A | WO 2017-048215 A1 (INTEL IP CORPORATION) 23 March 2017<br>See paragraphs [0028]-[0033]. | 1-14 |

☐  Further documents are listed in the continuation of Box C.      ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 MAY 2019 (07.05.2019) | **08 MAY 2019 (08.05.2019)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

**INTERNATIONAL SEARCH REPORT**
Information on patent family members

International application No.

PCT/KR2019/000924

| Patent document cited in search report | Publication date | Patent family member | Publication date |
|---|---|---|---|
| WO 2016-163855 A1 | 13/10/2016 | CN 106067845 A | 02/11/2016 |
| WO 2017-048215 A1 | 23/03/2017 | CN 107925532 A | 17/04/2018 |
| | | EP 3350951 A1 | 25/07/2018 |
| | | US 2018-0249458 A1 | 30/08/2018 |
| | | US 2018-0263021 A1 | 13/09/2018 |

Form PCT/ISA/210 (patent family annex) (January 2015)